(19)

Europäisches
Patentamt
European
Patent Office
Office européen
des brevets

(11)    **EP 1 517 173 B1**

(12)    **EUROPEAN PATENT SPECIFICATION**

(45) Date of publication and mention
of the grant of the patent:
**16.10.2013   Bulletin 2013/42**

(51) Int Cl.:
***G02F 1/365*** *(2006.01)*

(21) Application number: **04255188.7**

(22) Date of filing: **27.08.2004**

(54) **A nonlinear optical device**

Nichtlineare optische Vorrichtung

Dispositif optique non- linéaire

(84) Designated Contracting States:
**AT BE BG CH CY CZ DE DK EE ES FI FR GB GR
HU IE IT LI LU MC NL PL PT RO SE SI SK TR**

(30) Priority: **27.08.2003   US 648797**

(43) Date of publication of application:
**23.03.2005   Bulletin 2005/12**

(73) Proprietor: **Luxtaltek Corporation
Chunan Miaoli County 350 (TW)**

(72) Inventors:
* **Baumberg, Jeremy
Winchester SO23 7EF (GB)**
* **Wilkinson, James
Shirley
Southampton SO15 5DS (GB)**
* **Charlton, Martin
Bitterne Park
Southampton SO18 1NY (GB)**
* **Zoorob, Majd
Southampton SO15 2NY (GB)**
* **Netti, Maria Caterina
Southampton SO16 7DU (GB)**
* **Perney, Nicolas
Shirley
Southampton SO14 4HA (GB)**
* **Lincoln, John
Salislbury
Wiltishire SP1 1JS (GB)**
* **Parker, Greg
Brockenhurst SO42 7QW (GB)**

(74) Representative: **Finnie, Peter John et al
Gill Jennings & Every LLP
The Broadgate Tower
20 Primrose Street
London EC2A 2ES (GB)**

(56) References cited:
* **GROSS B ET AL: "Propagation of femtosecond
pulses in focusing nonlinear Kerr planar
waveguides" OPTICS COMMUNICATIONS,
NORTH-HOLLAND PUBLISHING CO.
AMSTERDAM, NL, vol. 129, no. 1, 1 August 1996
(1996-08-01), pages 143-151, XP004011374 ISSN:
0030-4018**
* **KOLESOV R: "Optical continua generation in a
coherently prepared Raman medium" PHYSICAL
REVIEW A (ATOMIC, MOLECULAR, AND
OPTICAL PHYSICS), DEC. 2001, APS THROUGH
AIP, USA, vol. 64, no. 6, November 2001 (2001-11),
pages 063819/1-8, XP002275994 ISSN: 1050-2947**
* **FEDOTOV A B ET AL: "Frequency-tunable
supercontinuum generation in photonic-crystal
fibers by femtosecond pulses of an optical
parametric amplifier" JOURNAL OF THE
OPTICAL SOCIETY OF AMERICA B (OPTICAL
PHYSICS), SEPT. 2002, OPT. SOC. AMERICA,
USA, vol. 19, no. 9, September 2002 (2002-09),
pages 2156-2164, XP002275995 ISSN: 0740-3224**
* **SPALTER S ET AL: "STRONG SELF-PHASE
MODULATION IN PLANAR CHALCOGENIDE
GLASS WAVEGUIDES", OPTICS LETTERS, OSA,
OPTICAL SOCIETY OF AMERICA,
WASHINGTON, DC, US, vol. 27, no. 5, 1 March
2002 (2002-03-01), pages 363-365, XP001117265,
ISSN: 0146-9592**

**(Cont. next page)**

EP 1 517 173 B1

- **NETTI M C ET AL: "Separation of photonic crystal waveguides modes using femtosecond time-of-flight", APPLIED PHYSICS LETTERS, AIP, AMERICAN INSTITUTE OF PHYSICS, MELVILLE, NY, US LNKD- DOI:10.1063/1.1520709, vol. 81, no. 21, 18 November 2002 (2002-11-18), pages 3927-3929, XP012032556, ISSN: 0003-6951**

**Description**

**Field of the Invention**

The present invention relates to nonlinear optical devices and in particular to a planar waveguide device for nonlinear optical signal generation with large accessible bandwidth, including optical continuum generation.

**Background to the Invention**

Optical sources which can generate radiation over a wide wavelength range currently have many applications in scientific research, engineering and medicine. Often the application requires the coherence properties associated with laser radiation and so various laser materials have been developed which exhibit a broad gain bandwidth when suitably pumped. A good example is titanium doped sapphire, which is characterized by a gain bandwidth covering the range 650-1100nm. The coherence properties of lasers based on broadband material systems may be further enhanced in a number of ways. The technique of modelocking permits the utilization of much of the available laser bandwidth to obtain a repetitive train of short (or ultra short) pulses. Alternatively, the laser cavity may contain frequency selective elements to ensure that the laser only emits radiation with a relatively narrow spectrum centered around a particular wavelength. By adjusting a frequency selective element this wavelength may be tuned across the available gain bandwidth.

However, as many laser sources only operate over narrower, well-defined wavelength ranges, nonlinear optical processes have been employed to generate other wavelengths using the output from available laser sources. A wide range of nonlinear optical processes are known, with the common factor being a nonlinear dependence of the electric polarization that is induced in the nonlinear material on the electric field (or intensity) of an optical input, resulting in the generated optical output. The order of nonlinearity relates to the specific integer power of the electric field on which the induced polarization depends. Second order effects include second harmonic generation, which is commonly used to "frequency double" the output from a laser source, and also two-wave mixing. Third order effects are more numerous and include third harmonic generation, four-wave mixing, self-phase modulation, self-focussing and Raman scattering.

As indicated, non-linear optical devices have the advantage that they can be "bolted on" to the output of existing laser sources in order to extend the available wavelength range or simply to generate nonlinearly another well-defined wavelength from the laser radiation. The strength of the nonlinear effect is generally determined by the relevant nonlinear coefficient of the material and the peak intensity of the input (pump) beam inside the material. However, other factors such as interaction length and accurate phase-matching can be very important in maximizing the efficiency of conversion in the nonlinear interaction. Nonlinear processes and materials capable of generating radiation over a wide wavelength range from a relatively narrow band optical input are of particular interest.

One example is optical continuum generation (CG), whereby a cascade of (generally) third order processes enables the generation of an optical signal with a continuous, or near continuous, spectrum over a very broad bandwidth. The continuum may share a number of properties with laser light, including spatial coherence. However, the broad bandwidth means the continuum is of lower temporal coherence, which make it an attractive source for some applications, such as low coherence interferometry. The continuum generated can be used in its entirety or optically filtered or sliced as the application requires. Kolesov. R in "Optical continua generation in a coherently prepared Raman medium" Physical Review A (Atomic, Molecular, and Optical Physics), DEC. 2001, vol.64, no. 6 November 2001 (2001-11) pages 063819/1-8 describes a theoretical study of optical continua generation in a coherently prepared Raman medium. A technique for producing broad band coherent optical spectra is proposed.

Another example are the optical parametric processes, where one or more optical signals that are tunable over a wide bandwidth are generated from an input pump at a fixed wavelength. In particular, the optical parametric amplifier (OPA) provides parametric amplification at two tunable wavelengths (the signal and idler), whereas the optical parametric oscillator (OPO) employs (tunable) optical feedback at one, or both, of these wavelengths to achieve self-oscillation.

A variety of techniques and materials have been investigated for enhancing the bandwidth that can be accessed by the nonlinear processes described above, including CG and optical parametric devices. However, as will now be described, all of these have their attendant drawbacks.

Optical CG has typically been performed in bulk materials, both liquid and gas, due to the simplicity of implementation and the relatively small sample size required. However, due the low nonlinear coefficient associated with many materials, the characteristic threshold intensity is high and so a high peak intensity laser source is required. This usually takes the form of a modelocked laser system generating very short (or ultrashort) pulses which are then amplified and the radiation focussed tightly onto the target material. Consequently, there is a high attendant risk of surface or bulk damage to the sample unless it is a material exhibiting a high damage threshold such as sapphire, which also exhibits good stability of CG.

One approach to reducing the threshold pulse energy required has been the utilization of optical fibers for CG.

Despite a relatively low nonlinear coefficient for the fiber material, the lateral optical confinement ensures that an adequate optical intensity can be maintained throughout a long interaction length of fiber for efficient CG. Nevertheless, the associated pulse energy damage threshold is also reduced and so end facet damage may occur, requiring the cleaving of a new facet or provision of a new fiber entirely. In addition, the stability of CG in optical fibers is typically low, the overall size may limit the compactness of the source and the optical mode properties are not easily compatible with the planar waveguide devices used in photonic integrated circuits. A further problem is maintaining the polarization (electric field orientation) of the light generated, which affects its usefulness in applications.

Another issue associated with CG is the characteristic optical dispersion (variation of refractive index with wavelength) of the device in which the continuum is generated. It is known that the threshold for CG is lowered when the pump is at a wavelength where the dispersion of the device is near zero. Furthermore, due to the proximity of the anomalous dispersion region, more nonlinear processes may be accessed and bandwidth may more easily be generated beyond the zero dispersion wavelength, extending the spectrum further into the infrared. In the case of bulk materials, the characteristic dispersion is simply the material dispersion, which usually lies within the normal dispersion region at the optical wavelengths of interest. But for waveguides, the situation is more complex, with the total dispersion also depending on waveguide and modal dispersion. This provides scope for controlling the total dispersion via the waveguide design parameters. To this end, zero dispersion fibers and tapered fibers have been manufactured.

A further development in the control of fiber dispersion has been the fabrication of the so-called *microstructured fiber* (MF) or *photonic crystal fiber* (PCF). These fibers consist of a solid silica core surrounded by an array of air holes running along the fiber, which provides a wavelength-dependent effective index for the cladding and can allow single-mode guidance throughout the visible and near infra-red. By suitable choice of arrangement and size of holes, the dispersion properties of the fiber can be tailored, as can the effective area of the propagating mode. Such dispersion engineered fibers have been used to enhance the continuum bandwidth that can be generated from a short pulse pump, resulting in so-called *supercontinuum generation.* Here, bandwidth in excess of 800nm has been generated as a result of a cascade of processes, including self-phase modulation (SPM), four-wave mixing (FWM), Raman scattering (RS), soliton formation and decay, soliton self-frequency shifting (SSFS) and self-steepening (SS). However, despite the improvement in CG bandwidth, the microstructured fibers still suffer from the drawbacks associated with more conventional fibers, as outlined above. In addition, there are many materials that can not be fabricated in bulk or fiber form and are therefore unavailable for CG in these configurations.

Another approach for enhancing a nonlinear phenomenon has been the employment of a planar chalcogenide glass (ChG) waveguide, as described by S. Spälter et al is "Strong self-phase modulation in planar chalcogenide glass waveguides", optics letters, Vol. 27, Issue 5, pp. 363-365. Here, the intention was to enhance the level of nonlinear phase shift that could be obtained via SPM for a given pump pulse energy, a key application being optical switching for optical communication systems. A thin film of high refractive index GeSe-based glass material formed the core of a planar waveguide that was subjected to pump pulses from an amplified mode-locked fiber ring laser. A maximum peak phase shift of $1.6\pi$ was recorded for an input pulse energy of 461 pJ. However, although the process was accompanied by nonlinear spectral broadening, which resulted in an optical output having a bandwidth broader than that of the input pulse, the degree of spectral broadening was not sufficient to generate an optical continuum.

Gross B et al in "Propagation of femtosecond pulses in focusing nonlinear Kerr planar waveguides" Optics Communications, North-Holland Publishing Co. Amsterdam, NL, vol. 129, no. 1, 1 August 1996 (1996-08-01) pages 143-151 describes a theoretical study of the propagation of femtosecond pulses in a nonlinear Kerr material in planar waveguide form rather than optical fibre or bulk form, and which takes account of spatio-temporal coupling. The results suggested that super continuum generation may be possible.

Planar waveguides have also been employed for enhanced performance in parametric devices, such as the optical parametric oscillator (OPO) and optical parametric amplifier (OPA). Typical devices comprise a layer of periodically poled material such as Lithium Niobate ($Li_2O_3$), also known as PPLN. Although improved performance is obtained in terms of threshold power and conversion efficiency, the available tuning range is still limited.

## Summary of the Invention

According to a first aspect of the present invention there is provided a non-linear optical device as recited in claim 1.

However, it is preferred that the ratio of the accessible bandwidth to the input bandwidth is at least 10.

Here, the term "bandwidth" is defined as the wavelength interval beyond which the spectral radiant intensity remains below a level of- 30 decibels (0.001) of the maximum value. The logarithmic definition is appropriate due to the widely differing spectral intensity of the different wavelengths that may be generated by the nonlinear optical process.

A variety of materials exhibit both the high linear and nonlinear refractive index preferred for the core layer in the present invention. Preferably, the core layer comprises an oxide of any of tantalum, hafnium, zirconium, titanium and aluminium.

The performance and wavelength range of the nonlinear device can be extended by suitable doping of the core material. Preferably, the planar optical waveguide has a core layer which comprises a material doped with a rare earth element. An example is Neodymium (Nd).

Although the performance of the nonlinear device may be characterized in terms of the enhancement of the accessible bandwidth relative to the bandwidth of the optical input, it is also desirable that the device is characterized by a large absolute accessible bandwidth. Preferably, the accessible bandwidth is at least 200nm. More preferably, the accessible bandwidth is at least 500nm.

Preferably, the ratio of the accessible bandwidth to the input bandwidth is non- linearly dependent on the peak intensity of the optical input. Alternatively, the ratio may be linearly dependent on intensity.

A non-linear optical device according to the present invention will typically operate by means of a nonlinear interaction, which comprises one or more third order nonlinear optical processes. Preferably, the non-linear optical process comprises one or more processes selected from a group which includes self-phase modulation, self-focussing, four-wave mixing, Raman scattering and soliton formation.

In addition to the simple broad area broad area waveguide configuration, a nonlinear device according to the present invention may comprise other forms of planar waveguide structure, which may provide enhanced optical confinement. Preferably, the planar waveguide comprises a ridge waveguide. Alternatively, the planar waveguide may comprise a rib waveguide.

One of the problems associated with planar structures, is tne coupling in of light from other devices or sources having a different geometry, such as optical fibre. This problem can be mitigated by employing beam shaping or spot-size converting structures, which can be integrated on the same chip.

Preferably, a portion of the planar waveguide is tapered. Preferably, the tapered region is proximate the input of the planar waveguide. It is preferred that the taper is characterized by a gradually increasing waveguide (core) width. However, the taper may be characterized by a gradually decreasing waveguide (core) width Preferably, the taper is symmetrical.

The non-linear optical device may also comprise other structures for pre-processing of the optical input or post-processing of the optical output. Preferably, a portion of the planar waveguide includes a structure, the structure being operative to modify the optical input and/or optical output.

Preferably, the structure is operative to filter the optical input and/or optical output. The optical transfer function of the filter may result in changes to both the phase and amplitude of the different spectral components of the optical signal spectrum. For example, particular wavelengths or ranges of wavelengths may be transmitted, whilst others are blocked or reflected.

Preferably, the non- linear optical device has a structure which is operative to compress temporally the optical input and/or optical output. Pulse compression can serve to increase pulse peak power, leading to a stronger induced nonlinear effect, and can also pre- compensate for pulse broadening during subsequent propagation due to refractive index dispersion.

Preferably, the non- linear optical device has a structure which is operative to modify the optical dispersion characteristics of the planar optical waveguide. The structure will typically be disposed either proximate or in the region of nonlinear signal generation, and can serve to tailor the waveguide dispersion characteristics to optimize device performance and accessible bandwidth enhancement.

Preferably, the optical dispersion characteristics of the planar optical waveguide are modified by the structure to achieve zero dispersion at points along the waveguide. Alternatively, the optical dispersion characteristics of the planar optical waveguide are modified to achieve normal dispersion at a predetermined wavelength.

Preferably, the planar optical waveguide comprises a photonic structure which is operative to modify the optical dispersion characteristics of the planar optical waveguide. Alternatively, the planar optical waveguide comprises at least a further planar layer which is operative to modify the optical dispersion characteristics of the planar optical waveguide.

A particular application of the present invention is in optical continuum generation. The nonlinear device can give rise to optical continua and supercontinua characterized by particularly large bandwidth.

According to a second aspect of the present invention, an optical continuum source comprises a non-linear optical device according to the first aspect of the present invention, wherein the optical output has an optical spectrum comprising an optical continuum over the accessible bandwidth as a result of non-linear broadening of the optical input.

Preferably, the degree of broadening is non- linearly dependent on the peak intensity of the optical input. Alternatively, the degree of broadening is linearly dependent on intensity.

In order to enhance the continuum generation process it is preferred that the non-linear optical process is seeded with an optical seed input.

The waveguide devices according to the first and second aspects may be incorporated into more complex optical or photonic devices.

According to a third aspect of the present invention, an interferometer comprises:

an optical continuum source according to the second aspect

a reference arm; a signal arm; a detection arm;

a beam splitter optically coupled to the optical continuum source, in use, the beam splitter splitting the optical continuum output between the reference arm and the signal arm; and,

a beam combiner optically coupled to the detection arm, in use, the beam combiner combining optical beams reflected by part of the reference arm and part of the signal arm.

Preferably, the interferometer comprises a photonic integrated circuit, allowing easy integration of all the components on a single chip.

Various arrangements of interferometer are possible. However, it is preferred that a single optical component acts as the beam splitter and the beam combiner, in a Michelson type arrangement.

Preferably, an arm of the interferometer includes a photonic crystal structure. Such a structure may be used to introduce dispersion, dispersion compensation or time delay into the interferometer arm. This type of interferometer with broad band source is particularly useful for applications involving low coherence interferometry.

Preferably, a system for performing optical coherence tomography on a sample comprises:

an interferometer according to the third aspect, in use, the sample located in the signal arm;

means for varying an optical path length of the reference arm; and,

a detector for detecting the recombined optical beam comprising a reflected optical beam from the reference arm and a beam back scattered by the sample in the signal arm.

A further application of the present invention is in optical parametric devices for the tunable generation and amplification of an optical output over a wide wavelength range.

According to a fourth aspect of the present invention, an optical parametric oscillator comprises a non-linear optical device according to the first aspect of the present invention and means for providing optical feedback at a wavelength within the accessible bandwidth.

Preferably, the optical feedback means is provided at least in part by a photonic structure.

According to a fifth aspect of the present invention, an optical parametric amplifier comprises a non-linear optical device according to the first aspect of the present invention adapted to receive a further optical input to be amplified at a wavelength within the accessible bandwidth.

Of course, there are many other applications of the present invention. Preferably, an optical system includes a non-linear optical device according to the first aspect of the present invention.

According to a sixth aspect of the present invention, a method for generating an optical signal comprises the steps recited in claim 30.

Thus the present invention provides an extremely flexible nonlinear device, which substantially enhances the bandwidth accessible in a nonlinear optical interaction. The key element of the device is a planar waveguide formed from material having both high linear and nonlinear refractive index, which combines the advantages of strong optical confinement and high intensity over an extended interaction region with those of a highly nonlinear material. The net result is an extremely efficient nonlinear interaction with a considerably enhanced accessible bandwidth, as compared to that achievable in prior art planar devices. The device has particular application in optical continuum and supercontinuum generation and also in broadly tunable parametric devices. The geometry of the planar device makes it particularly amenable to the integration of other functionality on the same chip and also compatible with modem photonic integrated circuits. By using tapers, ridge and rib waveguides, and also pulse compression, dispersion modifying and filtering structures (particularly photonic crystal structures) the performance and range of applications of the device can be greatly improved. The planar waveguide device may be incorporated in more complex photonic integrated circuits, such as a Michelson interferometer for low coherence interferometry based optical coherence tomography.

**Brief Description of the Drawings**

Examples of the present invention will now be described in detail with reference to the accompanying drawings, in which:

Figure 1A illustrates a system for non-linear bandwidth generation according to the present invention;

Figures 1B and 1C show planar optical waveguides according to the present invention;

Figure 2 shows the wavelength dependence of (a) the material refractive index, (b) the effective refractive index and (c) the total refractive index for a waveguide of the type shown in Figure 1 B with a $Ta_2O_5$ core;

Figure 3 shows the wavelength dependence of both the group velocity and the dispersion parameter ($D$) in a $Ta_2O_5$ planar waveguide;

Figures 4A to 4D illustrate, on a macroscopic and microscopic level, a nonlinear optical interaction between light and matter;

Figures 5A, 5B and 5C illustrate the nonlinear process of self-focussing;

Figures 6A and 6B illustrate temporally and spectrally, respectively, the nonlinear process of self-phase modulation of an ultrashort pulse;

Figure 7 illustrates an arrangement for optical CG in a $Ta_2O_5$ planar waveguide with a pulsed input;

Figure 8 shows the optical input and output spectra for CG in the arrangement of Figure 7;

Figure 9A compares the optical input and output spectra obtained for CG in a $Ta_2O_5$ planar waveguide with CG in known bulk sapphire material;

Figure 9B shows the output spectra for CG with two different wavelengths of pump laser source;

Figure 10 shows a planar optical waveguide according to the present invention;

Figure 11 illustrates the concept of on-chip pre- and post-processing in the device of Figure 10;

Figure 12 shows a planar waveguide with vertically tapered input region;

Figure 13 shows a planar waveguide with laterally tapered input regions;

Figure 14 shows a planar waveguide with a 2-D photonic structure for on-chip filtering;

Figure 15 shows a planar waveguide with a 1-D photonic structure for on-chip filtering;

Figure 16 shows a planar waveguide with laterally tapered input regions and a photonic structure for on-chip filtering;

Figure 17 shows a ridge type embodiment of a planar waveguide;

Figure 18 shows a rib type embodiment of a planar waveguide;

Figure 19 shows a ridge type planar waveguide with 1-D photonic structure for on-chip filtering;

Figure 20 shows a rib type planar waveguide with 1-D photonic structure for on-chip filtering;

Figure 21 shows a ridge type planar waveguide with laterally tapered input region;

Figure 22 shows a rib type planarwaveguide with laterally tapered input region;

Figure 23 shows ridge type planar waveguides having laterally up- or down-tapered input/output regions.

Figure 24A shows a ridge type planar waveguide with laterally tapered input region and photonic structure for on-chip filtering;

Figure 24B shows a rib type planar waveguide with laterally tapered input region and photonic structure for on-chip filtering;

Figure 25A shows a three-channel ridge type planar waveguide with laterally tapered input regions and photonic crystal structures for on-chip filtering;

Figure 25B shows a three-channel rib type planar waveguide with laterally tapered input regions and photonic crystal structures for on-chip filtering;

Figure 26 shows a planarwaveguide with a 1-D cladding photonic structure for waveguide dispersion control;

Figure 27 shows a planar waveguide with a 1-D core/cladding photonic structure for waveguide dispersion control;

Figure 28 shows a planar waveguide with a 2-D buffer/core/cladding photonic crystal structure for waveguide dispersion control;

Figure 29 shows a planar waveguide with a multilayer structure for waveguide dispersion control;

Figure 30 shows a planar waveguide with 2-D photonic structure for on-chip pulse compression;

Figure 31 shows a planar waveguide with 1-D photonic structure for on-chip pulse compression;

Figure 32 illustrates the basic arrangement for Optical Coherence Tomography (OCT) using low coherence interferometry;

Figure 33 shows a block diagram of an interferometer arrangement for OCT using CG as the optical source;

Figure 34 shows a perspective view of an on-chip integrated Michelson Interferometer with CG arm using planar ridge waveguides;

Figure 35 show a plan view of Figure 34;

Figure 36 shows on-chip polarization or wavelength splitting for providing inputs to two OCT Michelson Interferometers;

Figure 37 shows off-chip optical path length scanning of the reference arm;

Figure 38 shows on-chip optical path length scanning of the reference arm;

Figure 39 shows off-chip single-channel OCT detection;

Figure 40 shows off-chip multi-channel OCT detection;

Figure 41 shows on-chip integrated single-channel OCT detection;

Figure 42 shows on-chip integrated multi-channel OCT detection;

Figure 43 shows integrated on-chip modulation of the CG arm shown in Figure 35;

Figure 44 shows integrated on-chip modulation of the post-splitting two input arms of the device shown in Figure 35;

Figure 45 shows a known PPLN optical parametric generator;

Figure 46 shows a known PPLN optical parametric oscillator;

Figure 47 illustrates the concept of an OPO based on a nonlinear device according to the present invention;

Figure 48 illustrates the concept of an OPO based on the nonlinear device with pre- and post-processing;

Figure 49 shows an OPO with feedback via on-chip discrete photonic structures; and,

Figure 50 shows an OPO with feedback via an on-chip waveguide and waveguide beamsplitters.

**Detailed Description**

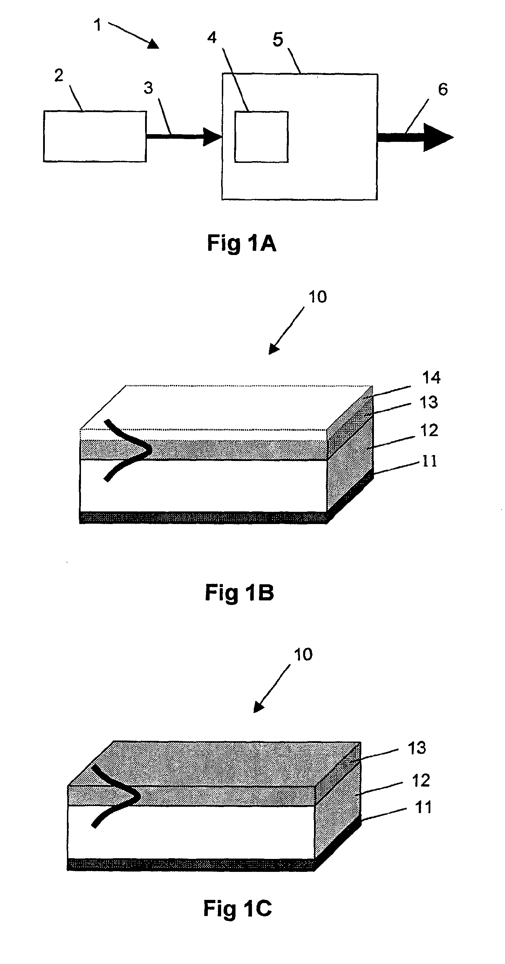

The present invention is directed to a device for non-linear bandwidth generation. Figure 1A illustrates the overall system 1, which comprises an optical source 2 for generating an optical input 3 that is coupled into an optical device 5 having a non-linear portion 4 for generating an optical output 6 from at least a portion of the optical input 3. The optical input 3 acts as a "pump" for the non-linear process occurring in the non-linear portion 4, and the optical output 6 generated has a wavelength within an accessible bandwidth, which is substantially enhanced by the operation of the non-linear portion. In the present invention, the non-linear portion 4 is provided by a planar waveguide and the optical source 2 is typically a mode-locked laser, which provides an ultra-short pulsed optical input 3 to the non-linear waveguide 4.

The propagation of ultra-short, intense pulses in a high index planar waveguide according to the present invention is accompanied by an extremely large nonlinear spectral broadening, which may be exploited in a number of ways. A particularly useful application is in the generation of optical continua. Although the phenomenon of continuum generation is well known in bulk material and optical fiber, the spectral broadening achieved in planar waveguides according to the present invention exhibits unique characteristics. Unlike optical fiber, the high index planar waveguide enables the generation of a broad continuum of wavelengths by exploiting only a smaller number of nonlinear effects.

Planar optical waveguides are key devices in the construction of integrated optical circuits and lasers. The potential of those waveguides lies in the way the electric fields can distribute and propagate in the planar platform, providing a unique way to implement functionality on chip. Figures 1 B and 1 C show the typical geometry of two planar optical waveguides 10 according to the present invention. The  waveguide 10 shown in Figure 1A comprises buffer 12, core13 and cladding 14 layers formed on a substrate 11. Frequently, the cladding layer 14 is not necessary, as shown in Figure 1 C. The main degrees of freedom in engineering such a device are the dimensions of these waveguide layers and the materials used to form them. These two parameters determine how the light (signal) can propagate in the guide. The key material property is the refractive index $n$, with the condition $n_c > n_s$ required for optical confinement within the waveguide, where $n_c$ is the refractive index of the core layer and $n_s$ is the refractive index of the neighboring buffer and cladding layers. The refractive index is generally a wavelength dependent function, $n(\lambda)$, a property that is known in optics as *dispersion.*

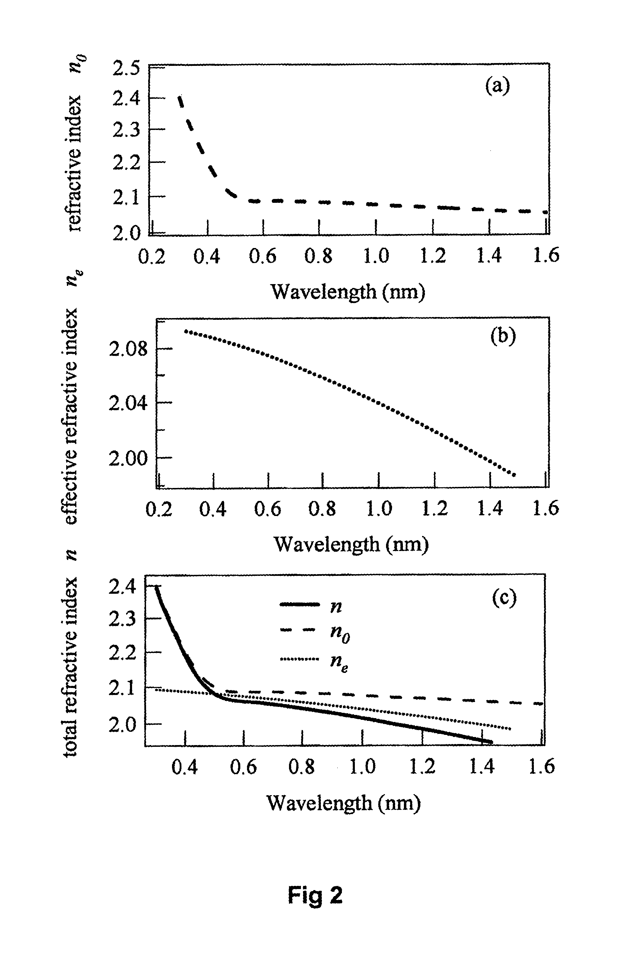

The wavelength dependence of the linear refractive index, $n_0(\lambda)$, of a material is the property that accounts for the difference in propagation speed (phase velocity) experienced by different wavelengths (colours) of light, when travelling through the material. The graph of Figure 2(a) shows the variation in linear refractive index with wavelength for tantalum pentoxide ($Ta_2O_5$), a preferred material for the core layer of a planar optical waveguide according to the present invention. The linear index is characterized by a steep fall with increasing wavelength in the ultra-violet (UV) region, followed by a much more gradual decline throughout the visible and near-infrared.

However, dispersion in optical waveguides is more complex phenomena, being given by the combined effect of two contributions: material dispersion and waveguide dispersion. Waveguide dispersion may also be characterised in terms of index by introducing an *effective refractive index $n_e (\lambda)$,* which corresponds to the guiding condition. This effective index takes into account the speed at which a particular optical mode (described by both polarization state and order) propagates in the waveguide. The index is proportional to the propagation constant for the specific mode and its value is always *in the range $n_s < n_e < n_c$.* Thus, for planar waveguides, $n_e (\lambda)$  depends on both the geometry of the waveguide (core and cladding thickness) and on the value of the refractive indices of the constituent materials.

Figure 2(b) shows a dispersion curve for the effective index of a fundamental mode propagating in a planar optical waveguide of the type shown in Figure 1 C. The waveguide comprises a 500nm thick layer of $Ta_2O_5$ deposited on a $2\mu$m thick layer of thermal silicon dioxide ($SiO_2$) located on a silicon wafer substrate. The linear refractive indices of the buffer and core materials are $n_s$ = 1.46 and $n_c$ = 2.1, respectively. The effective index shows a much more uniform decrease with increasing wavelength than the linear material index. Finally, the total dispersion of the planar optical waveguide, combining the contributions from material dispersion and waveguide dispersion, is  shown in Figure 2(c). The variation in total refractive index largely mirrors the material contribution, but exhibits a slightly steeper fall at visible and near-infrared wavelengths. Thus, although material dispersion is a fixed intrinsic property of the waveguide material used, the dispersion characteristics of the total index, $n(\lambda)$, can be tailored by varying the material and layer thicknesses to vary the contribution from waveguide dispersion, $n_e(\lambda)$.

Another useful way to express dispersion is to look at its temporal effects on light propagation within a material. The *phase velocity, $v_\phi$,* of a wave is inversely proportional *($v_\phi = c/n$)* to the linear refractive index of the material, $n$. The phase velocity is the velocity at which the phase of any one frequency component of the wave will propagate. This is not the same as the *group velocity* of the wave, which is the rate at which changes in amplitude (known as the *envelope* of the wave) will propagate. The group velocity, $v_g$, is often thought of as the velocity at which energy or information is conveyed along the wave and is given by

$$v_g = c\left[n - \lambda \frac{dn}{d\lambda}\right]^{-1}$$

The group velocity is also generally a function of wavelength. This dependence results in *group velocity dispersion* (GVD), which causes a short pulse of light to spread in time as a result of different frequency components of the pulse travelling at different velocities. This effect provides one of the limitations on achieving and maintaining short pulse duration and high data rate in optical communication systems. GVD is often quantified by the *group delay dispersion parameter.*

$$D = -\frac{\lambda}{c}\left(\frac{d^2 n}{d\lambda^2}\right)$$

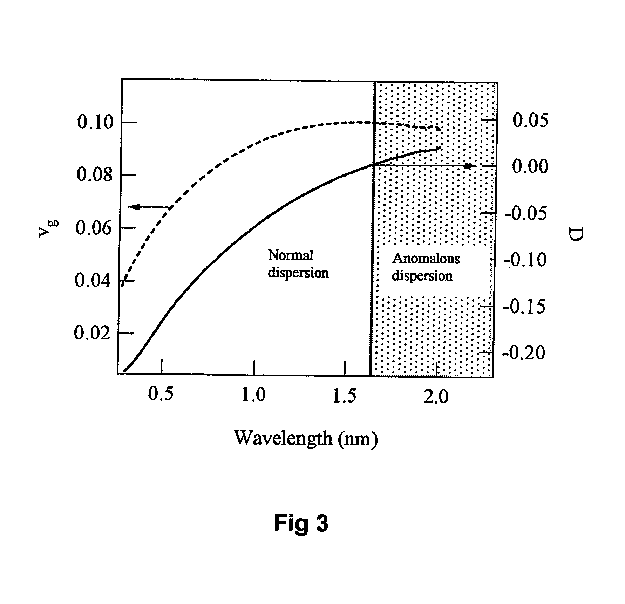

The *D* parameter accounts for the propagation delay per unit wavelength introduced by a unit length of material, and is usual quoted in units of ps/nm/Km). If *D* is less than zero, the medium is said to have normal, or positive dispersion. If *D* is greater than zero, the medium has anomalous, or negative dispersion. When a light pulse is propagating through a normally dispersive medium, the higher frequency components travel slower than the lower frequency components. Conversely, when a light pulse travels through an anomalously dispersive medium, high frequency components travel faster than the lower frequency components. Figure 3 shows a graph of the GVD and corresponding *D* parameter for $Ta_2O_5$, as used in a planar waveguide according to the present invention. The group velocity increases to a maximum at a wavelength a little over 1.6 $\mu$m before gradually declining. At the same time the *D* parameter increases, crossing the zero point at around 1.6 $\mu$m, in the transition from the normal to anomalous dispersion region.

From the above discussion, it is clear that tailoring the dispersion is a fundamental ingredient for controlling or engineering the propagation of light and, as such, is currently exploited in optical fibre communication. It is noted though that, thus far, only linear processes have been considered. This, however, is not a good approximation when dealing with the propagation of intense, ultra-short laser pulses. High index materials of the type used in the present invention can exhibit nonlinear optical effects, which can be particularly strong when induced by intense, ultra-short laser pulses. Although the presence of these nonlinearities in bulk material has been known since the introduction of ultrafast lasers, the more recent diffusion of planar waveguides and use of optical fibres in optical circuits has boosted investigation of nonlinear optical effects in such systems.

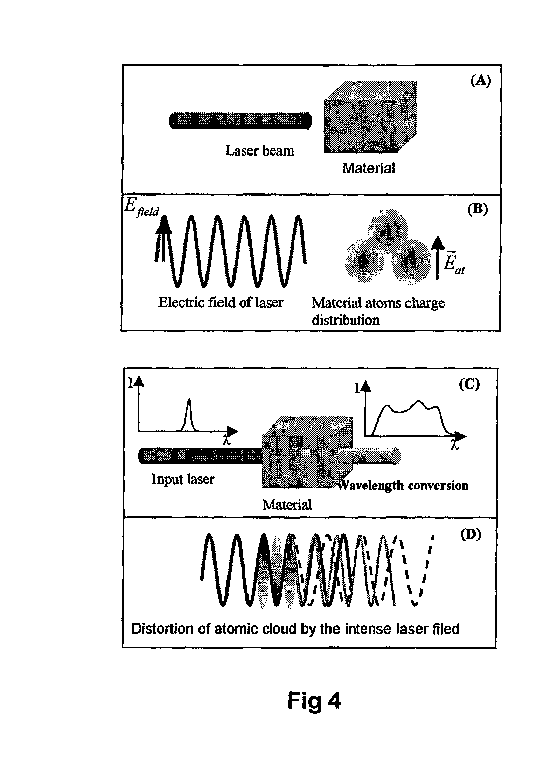

One of the most important characteristics of ultra-short laser pulse interaction with matter is the delivery of high energy in a very short time (~100 femtoseconds = $10^{-13}$ s) without permanently damaging the material. The light pulse itself can induce a whole range of physical phenomena as it propagates through the material. When the electric field, $E_{light}$, of a laser pulse is comparable with the internal field, $E_{at}$, of the atoms in the material, the laser light can "drive" the atoms and, in turn, be modified by this interaction. A simple representation of such an interaction is illustrated in Figures 4A to 4D. Figures 4A and 4B illustrate the situation before the interaction on a macroscopic and microscopic scale, respectively. One result of the interaction can be the generation of a new range of wavelengths around the input wavelength. This is illustrated on a macroscopic and microscopic scale in Figures 4C and 4D, respectively. This may take the form of *pulse broadening,* to the extent of *continuum generation,* or a particular combination of discrete input and output wavelengths, known as *parametric effects.* The strength of the interaction is determined not only by the laser pulse characteristics (spot size, pulse energy and pulse duration) but also by the nature of the material.

A key parameter in quantifying these particular phenomena is the strength of the nonlinearity which can be characterised by an intensity-dependent higher order contribution to the index of refraction, n, as follows

$$n(\lambda, r, t) = n_0(\lambda) + n_2(\lambda)I(r,t)$$

where $n_0(\lambda)$ is the ordinary linear index, $n_2(\lambda)$ is the nonlinear refractive index (in units of $m^2W^{-1}$) and $I(r,t)$ is the temporally and spatially varying intensity of the laser pulse. The nature of the linear term has been described previously and gives rise to optical phenomena such as refraction and reflection, in which light is merely deflected or delayed but remains unchanged in terms of its frequency (wavelength). The nonlinear term is rather different and depends on both the characteristic nonlinear coefficient of the material at the laser wavelength and on the spatial-temporal characteristics of the laser pulse. The higher the nonlinear index of refraction $n_2$ and/or the higher the intensity of the laser pulse, the stronger the nonlinear effect and the greater the nonlinear contribution to the total refractive index. This third order nonlinear effect is commonly known as the Optical Kerr effect.

One practical use of the Optical Kerr effect is the generation of a range of new wavelengths around the input wavelength. If the spread of wavelengths in broad and continuous, the result is termed an *Optical Continuum.* When there is both a spatial and temporal variation in the local intensity of the optical input field, the Optical Kerr effect can be resolved into two contributions, known as Self-Focussing (SF) and Self-Phase Modulation (SPM). Both effects have their origin in the spatio-temporal dependence of the refractive index $n(I(r,t))$, with the spatially-varying contribution, $I(r)$, giving rise to self-focussing and the temporally-varying contribution, $I(t)$, giving rise to self-phase modulation.

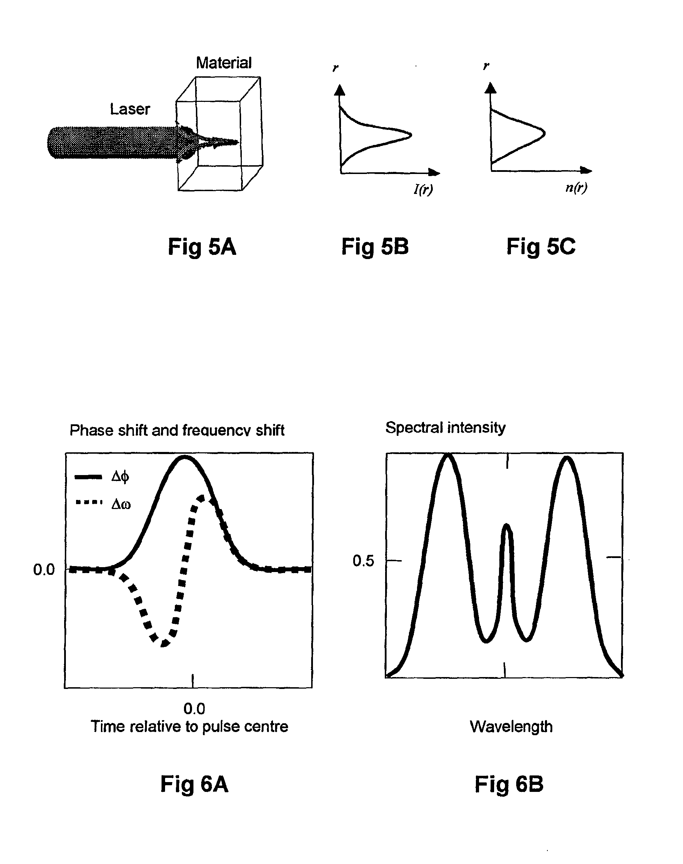

Figure 5A illustrates the first process of self-focussing in relation to a pulsed laser beam propagating through a nonlinear material. The beam will typically have a Gaussian spatial profile, as shown in Figure 5B, with the intensity highest at the center of the beam and falling radially so towards the edge of the beam. In the presence of the Kerr effect, the center of the beam will be give rise to a greater nonlinear refractive index within the Kerr medium than at the edges, as shown in Figure 5C. At the same time, the beam will experience this self-induced refractive index variation, with the phase velocity of the wavefront being less at the center of the pulse than at the edges. Thus, in effect, a weak positive lens is induced within the medium and the beam is gradually focused as it propagates. This can lead to the propagating beam collapsing into a filament, which concentrates the energy into a reduced volume inside the material. The result of such an intense trapped beam within the material gives rise to an even more intense interaction between the light and the material, leading to a whole range of nonlinear effects.

The intensity of an ultrashort pulse also changes rapidly with time and so, due to the near-instantaneous response of the material, different parts of the pulse will induce different magnitudes of nonlinear refractive index. This time-varying refractive index leads to a phase change, $\Delta\phi(t)$, across the temporal profile of the pulse, which is dependent on the instantaneous intensity in the following manner

$$\Delta\phi(t) = \frac{2\pi n_2 I(t) L}{\lambda}$$

where L is the length of the material. Since a time-varying phase corresponds to frequency (frequency is the time derivative of phase, $\omega = -d\phi/dt$), the phase delay, $\Delta\phi(t)$, results in a frequency chirp, $\Delta\omega$, across the pulse, given by

$$\Delta\omega = -\frac{d(\Delta\phi)}{dt}$$

As a result, the time-varying nonlinear refractive index of the material leads to what is termed self-phase modulation of the pulse. The frequency shift introduces new spectral components to the pulse, leading to a broadening of the spectral bandwidth. The phase shift and corresponding frequency shift induced across a Gaussian pulse by self-phase modulation is illustrated in Figure 6A. The resulting impact on the spectrum of the propagating pulse is shown in Figure 6B. In this example, the initially Gaussian spectrum is broadened, with two lobes either side of a suppressed central wavelength region.

Thus, a planar waveguide with a high associated nonlinear index of refraction has great potential, as it combines the properties of light confinement and guiding with those of a highly nonlinear material. Furthermore, by seeding the interaction with a pulse having a wavelength in the vicinity of zero group velocity dispersion or in the anomalous dispersion region, a wide range of nonlinear processes can occur in the medium. Self- phase modulation, self- focussing, four-wave mixing, Raman scattering, harmonic generation, soliton formation are among the nonlinear effects that may be initiated.

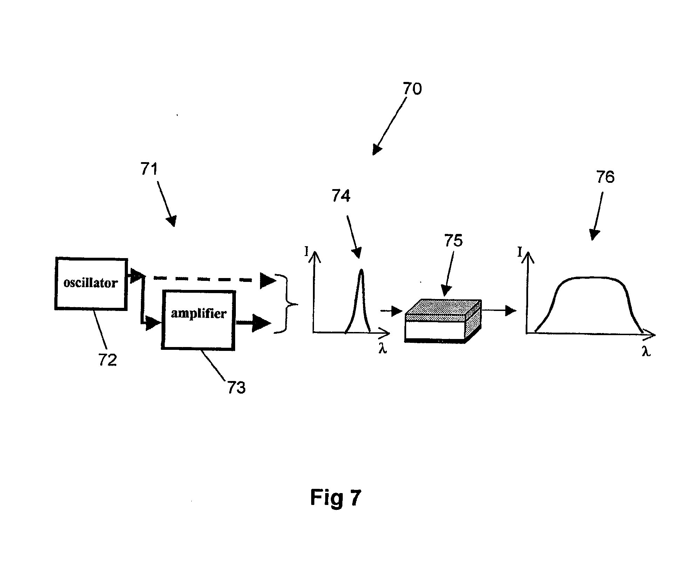

Fig 7 shows in more detail a particular arrangement of the system shown in Figure 1A. The system 70 shown is suitable for optical continuum generation 76 in a 13mm long $Ta_2O_5$ planar waveguide 75, according to the present invention. The waveguide comprises a 800nm thick core layer of undoped $Ta_2O_5$ deposited on a $2\mu m$ thick buffer layer of thermal silicon dioxide ($SiO_2$), which is located on a silicon wafer substrate. A laser source 71, comprising a modelocked titanium sapphire (TiS) laser oscillator 72 with regenerative amplifier 73, is used to provide ultrashort laser pulses which act as the optical pump source 74 in the interaction. The laser oscillator 72 alone can provide pulses of duration $t_p$= 110-150fs at a repetition rate of $f_r$ = 76MHz and a center wavelength of 800nm. A typical pulse energy of $E_p$ = 13nJ

corresponds to an average laser power $(P_{av} = f_r.E_p)$ of approximately 1W and a peak power $(P_{pk} \approx E_p/t_p)$ of approximately 90kW. With amplification provided by the regenerative amplifier, the overall laser system generates 150fs pulses at a repetition rate of 250kHz and a center wavelength of 800nm. Available pulse energy ranges between 40nJ and 2.4μJ, corresponding to an average laser power of between 10mW and 600mW and peak power of between 0.25MW and 16MW.

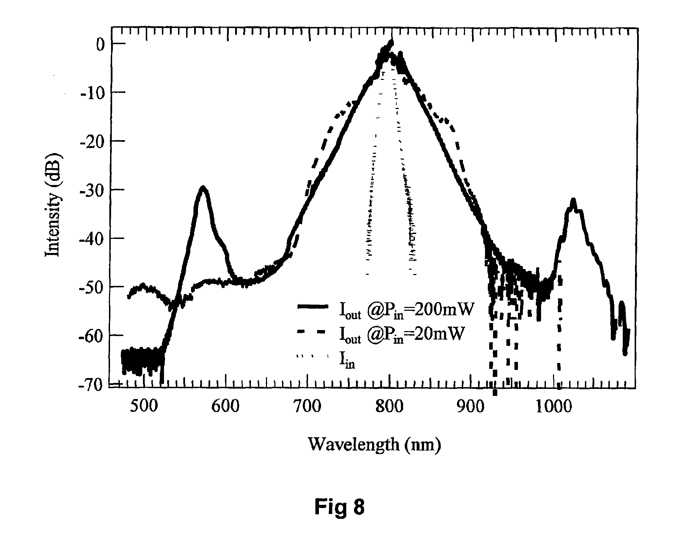

Figure 8 shows the spectrum of the output signal obtained at two pump powers, together with that of the input pump beam for comparison. The results were obtained with amplified input pulse energies of 80nJ and 800nJ, corresponding to an average input power of 20mW and 200mW, respectively, at a repetition rate of 250KHz. The input pump pulses have a bandwidth of 10nm, measured by the full-width at half-maximum (FWHM) intensity. However, as can be seen from the output spectrum, a measure of bandwidth on a logarithmic scale is more appropriate. The most commonly used logarithmic scale is the decibel scale, on which relative intensity is defined by

$$\text{Relative Intensity in dB} = -10\log_{10}\frac{I(\lambda)}{I_{\max}(\lambda)}$$

On the logarithmic decibel scale, the half-maximum intensity point, at which FWHM is conventionally measured, corresponds to the -3dB. However, here the point at which the spectral (radiant) intensity, $I(\lambda)$, falls permanently below $10^{-3}$ (0.001) of the peak (maximum) value, $I_{\max}(\lambda)$, is chosen for the measure of bandwidth. This equates to a relative intensity of -30dB on the decibel scale. Thus, the working definition of bandwidth is the wavelength interval $(\Delta\lambda)$ between the maximum $(\lambda_{\max})$ and minimum $(\lambda_{\min})$ wavelengths beyond which the relative intensity is less than -30dB, as follows:

$$\Delta\lambda = \lambda_{\max}(-30dB) - \lambda_{\min}(-30dB)$$

As can be seen from Figure 8, based on this definition, the input pump bandwidth of 50nm is non-linearly broadened to 200nm and 600nm, respectively, at an average pump power of 20mW and 200mW, corresponding to a peak power of approximately 0.5 and 5.5MW. This equates to a degree of nonlinear broadening $(\Delta\lambda_{out}/\Delta\lambda_{in})$ of between 4 and 12 times. Despite the large variation in spectral intensity over the nonlinearly generated spectrum, the small amount of radiation present at wavelengths towards the blue (and UV) and red (and infrared) is sufficient to make the output beam appear "white".

At $\lambda_p$=800nm, the pump is tuned to a wavelength within the normal dispersion regime of the planar waveguide. Furthermore, the dispersion present in the planar waveguide is less structured than that in present in the microstructured fibres used in prior art continuum generation. As a consequence the nonlinear interaction is dominated by the twin Optical Kerr effects of self-focussing and self-phase modulation. Nevertheless, it is clear that unusually broad continuum generation is occurring, with the spectrum extending into the anomalous dispersion region.

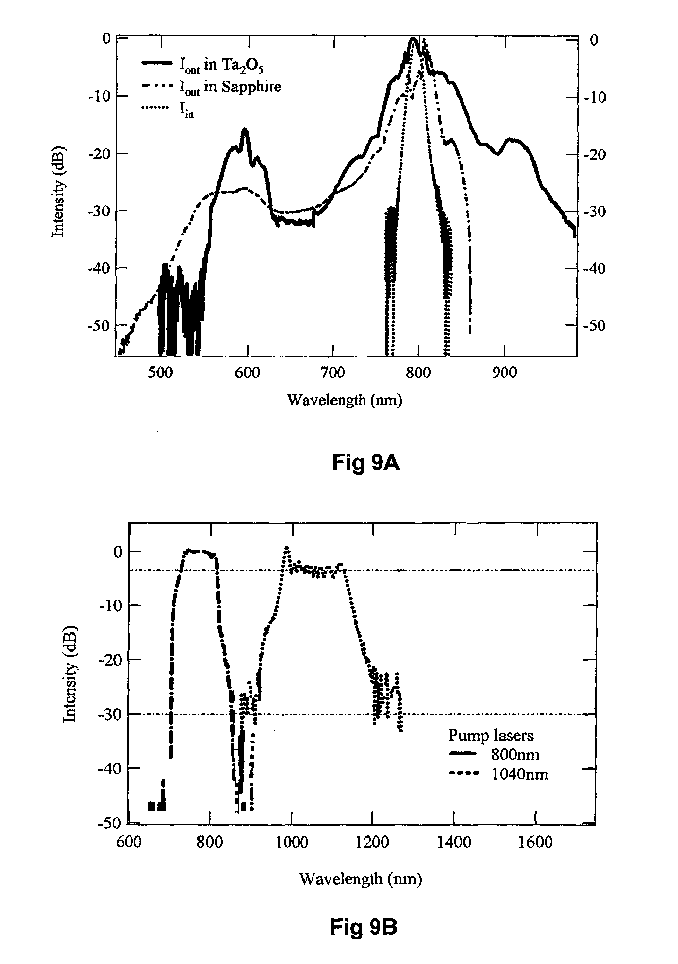

Figure 9A shows a comparison between the output spectrum obtained from continuum generation in bulk sapphire, as used in commercial systems, and that obtained in a $Ta_2O_5$ planar waveguide according to the present invention. The optical continuum generated in the planar waveguide extends much further into the near infrared spectral region. Non-linear broadening by self-phase modulation, for the purposes of optical switching, has previously been reported in a chalcogenide glass planar waveguide. However, although the spectrum of the output was nonlinearly broadened, the degree is much less than that obtained in a waveguide according to the present invention.

Figure 9B shows the spectra for continua generated with two different infra-red input pump wavelengths, namely 800nm, 1040nm, which are of particular interest for a variety of applications. These continua were generated in a ridge waveguide embodiment of the present invention, which will be described later. The results clearly demonstrate the broad applicability of planar waveguides according to the present invention for generating signals across a wide range from visible wavelengths to wavelengths in the near-infra-red. The continuum spectra shown in Figure 9B each span a bandwidth which includes the wavelength of the optical pump input used to generate it. The spectral intensity of the two spectra have been normalized, allowing easy comparison of the -3dB and -30dB spectral widths. The -3dB and -30dB points are denoted by intersection with the upper and lower horizontal dot-dash lines, respectively. An optical continuum was also generated with a 1550nm pump. The spectrum is not shown in Figure 9B, but spanned from at least 950nm to 1750nm, with measurement at shorter and longer wavelengths limited by the detection system used.

Using a planar waveguide with a 500nm $Ta_2O_5$ core layer, continuum generation is achieved for an average pump power as low as 10mW (pulse energy 40nJ, peak power 0.25MW). Alternative dimensions and materials should reduce the threshold sufficiently for continuum generation with unamplified pump pulses from the TiS laser oscillator alone. Suitable core materials include oxides such as hafnium oxide, zirconium oxide, titania, aluminium oxide. This is another advantageous feature of the planar waveguide device according to the present invention. Doping the core material with rare earth metals will modify the properties still further. Tantalum pentoxide films doped with Neodymium (Nd) have been investigated and demonstrate that such doping permits continuum generation to be extended into the ultraviolet (UV) spectral region. Further advantages of the planar waveguide geometry for continuum generation are preservation of polarization state and very low noise. Other techniques for CG do not preserve the polarization state of the continuum generated, leading to an optical signal with a polarization state that is spatially-varying or possibly depolarized. Such beams have a reduced range of applications. Similarly, a low level of unwanted background noise is also desirable.

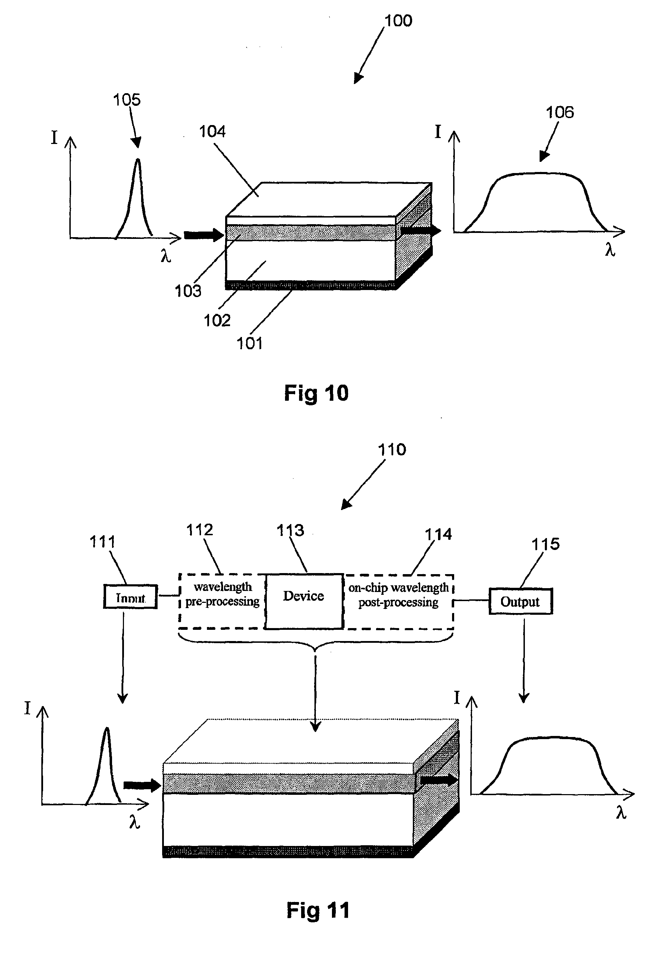

The basicwaveguide structure for a planar device 100 according to the present invention is reproduced in Figure 10. As shown, the device comprises a buffer 102, core 103 and cladding 104 layer formed on a substrate 101, although the cladding layer 104 may be neglected. A high intensity optical input with a comparatively narrow spectrum 105 is used as the pump for non-linear signal generation in the core layer 103. As a result of the interaction a non-linearly generated output is obtained with a spectrum, which may contain wavelength components over a very broad accessible range. Nevertheless, despite the impressive performance associated with the basic embodiment shown in Figure 10, there are many other possible embodiments which can further improve performance and build additional functionality into the device.

As indicated in Figure 1, the overall device 5 may have parts other than the non-linear portion 4. Figure 11 illustrates the broad concept whereby a planar waveguide chip 110 comprises not only a portion 113 fulfilling the role of enhancing the accessible nonlinearly-generated bandwidth but also a portion 114 that provides on chip post-processing of the generated signal prior to output 115. Indeed, the chip may also comprise elements 112 to provide pre-processing of the optical input 111. The planar waveguide geometry of the non-linear device according to the present inventions facilitates integration, including monolithic, with other components.

Efficient coupling of the pump beam into the waveguide core is one of the most important issues for generating continua, as power density is critical for strong nonlinearity. Thus, by launching most of the power into a high index thin film waveguide for optical confinement, high power density can be maintained over an interaction length. In the basic arrangement 10 of Figure 10, suitably designed external optics are required to beam shape and launch light efficiently into the waveguide core 103. However, an alternative approach is to build beam shaping or mode converting capability into the chip. An effective way to do this is by tapering an input region of the waveguide vertically or horizontally, so that there is no longer an abrupt facet extending along a plane perpendicular to the propagation direction. This has the added benefit of reducing the likelihood of surface or bulk damage to the waveguide material in the region of the facet.

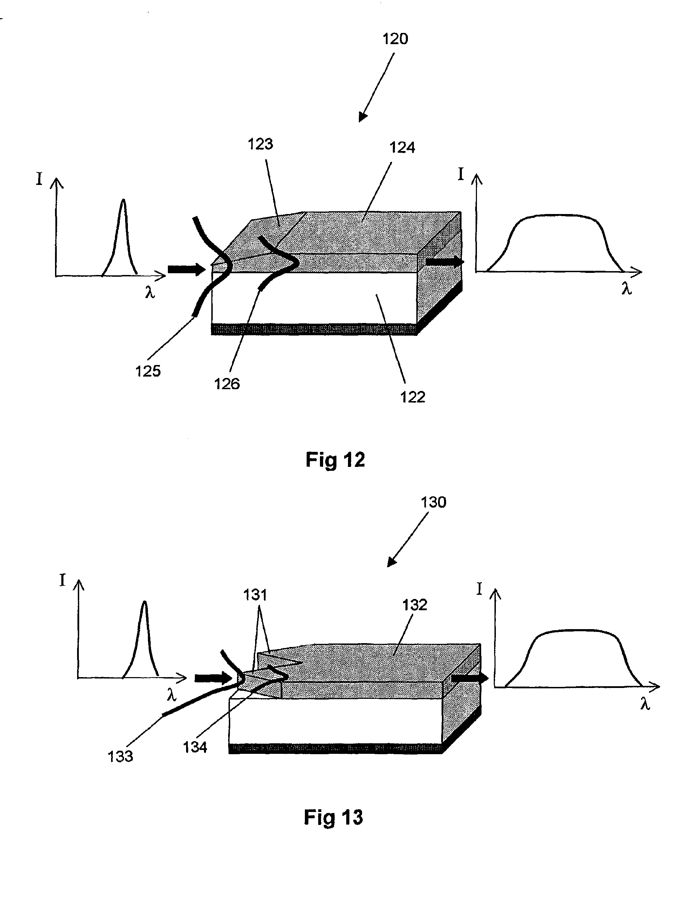

Figure 12 shows an embodiment of a planar waveguide 120 with a vertically tapered input region 123 prior to the main interaction region 124. The tapered region 123 is characterized by a gradual increase in the thickness of the waveguide core located on the buffer layer 122. This can be achieved during fabrication by growth or etching techniques. The result of the taper is a gradual coupling of light into the waveguide accompanied by a concentration of the input beam 125 as the beam size reduces 126. The tapered input region allows the use of a pump beam with a modal area much larger than the size of the thin film itself, by acting as spot-size converter. The waveguide120 itself may be single-mode, only supporting a single spatial mode, or may be multi-mode. As shown, the waveguide is broad area, only providing significant confinement in the vertical dimension.

Figure 13 shows an embodiment 130 with two adjacent horizontally (laterally) tapering input regions 131 prior to the main interaction region 132. This embodiment allows for the independent coupling of two separate beams into the waveguide or, alternatively, a more complex coupling of a single large beam into the waveguide. Again, the input beam 133 reduces in size 134 as it propagates. With a slow smooth taper, input light is adiabatically coupled into a mode supported by the waveguide and able to propagate therein. Provision of an on-chip spot-size converter increases the range of light delivery systems that can be used with the waveguide device, including optical fiber.

Adding on-chip functionality is one of the great advantages of planar waveguide devices. On-chip structures for spatial profiling and beam shaping have already been described in the context of waveguide tapers. However, other types of functionality can be included that modify the phase or amplitude of a beam propagating in the device. In particular, structures for filtering, shaping or slicing the spectra of the optical input or output may be integrated. Such filtering may be performed by conventional structures with wavelength-dependent absorption, transmission or diffraction properties. However, all the above operations can be performed by photonic crystal structures, which can control propagation of light, both spatially and spectrally, by virtue of their detailed structure which results in forbidden bands of optical propagation constant.

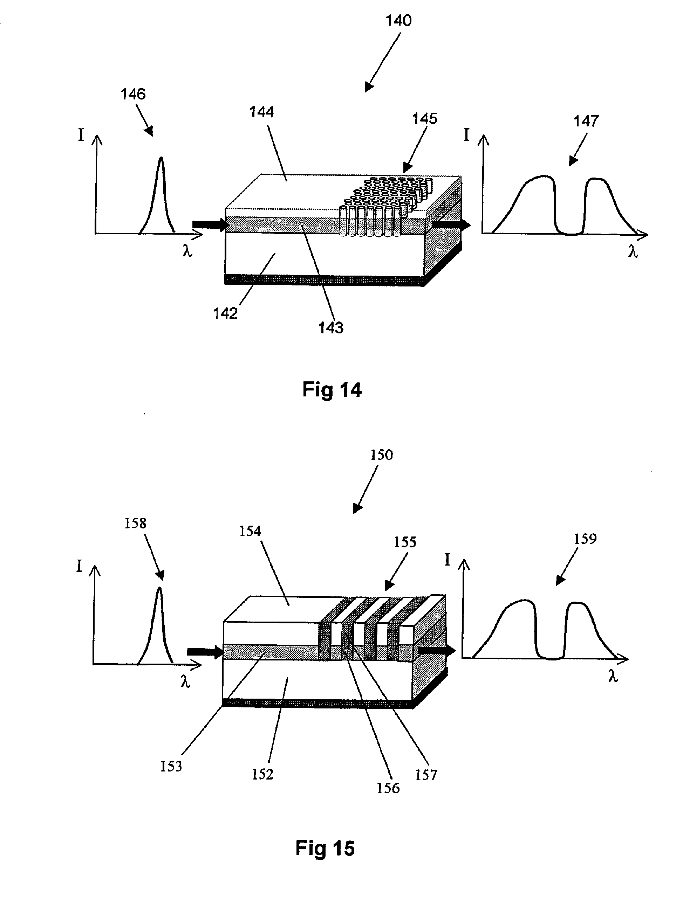

Figure 14 illustrates an embodiment of a planar waveguide 140 according to the present invention, which includes a 2-D photonic crystal structure 145 for on-chip post-processing of the optical output generated by the enhanced nonlinear process. In this example, the photonic crystal structure comprises rod-like holes extending through the cladding 144 and core 143 layers, but not into the buffer layer 142. However the rods may extend into the buffer layer or exist in any one or more of the cladding, core and buffer layers. Furthermore, the holes may be filled with any material. The input pulse 146 is converted into an optical continuum within the planar waveguide and the photonic crystal structure is designed with a complex optical transfer function to filter the spectrum in a particular manner. As shown, the photonic crystal structure 145 filters out a band of wavelengths to produce the spectrum 147. The optical transfer function may include spectral flattening to obtain a more uniform spectral intensity across a range of wavelengths within the continuum. Alternatively, discrete wavelengths or bands of wavelengths can be passed with intervening wavelength ranges blocked. Both forms of spectral processing may be employed in optical comb generation, which has applications in optical communications, including dense wavelength division multiplexing (DWDM). The photonic crystal structures may also perform a beam shaping or optical routing function as well.

Figure 15 shows another embodiment of a planar waveguide 150 according to the present invention, which includes a 1-D photonic crystal structure 155 for on-chip post-processing of the optical output generated by the enhanced nonlinear process. In this example, the photonic crystal structure comprises slabs extending through the cladding 154 and core 153 layers, but not into the buffer layer 152. As shown the slabs comprise a first material 156 in the core layer and a second material in the cladding layer 157. The refractive index of the materials 156 and 157 affects the optical confinement of signals within the waveguide and the associated optical transfer function is described in more detail in co-pending US patent application numbers 10/196727, 10/287825 and 10/421949, also in the name of Mesophotonics Limited. The input pulse 158 is converted into an optical continuum within the planar waveguide and the photonic crystal structure is designed with a complex optical transfer function to filter the spectrum in a particular manner. As shown, the photonic crystal structure 155 filters out a band of wavelengths to produce the spectrum 159.

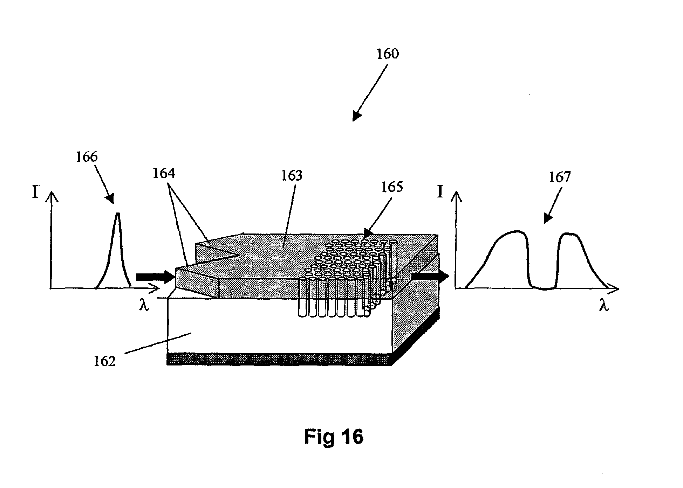

The on-chip processing functions described so far can, of course, be combined. Figure 16 shows an embodiment of a planar waveguide 160 according to the present invention that combines a double lateral taper input region 164 with a 1D/2D photonic crystal post-processing region 165. The structure includes a buffer layer 162 and a core layer 163 as previously described. The input pulse 166 is converted and output as spectrum 167. Here, efficient coupling of the optical input is combined with spectral processing of the nonlinearly generated optical output. Careful design of these two features permits optimisation over specific wavelength ranges.

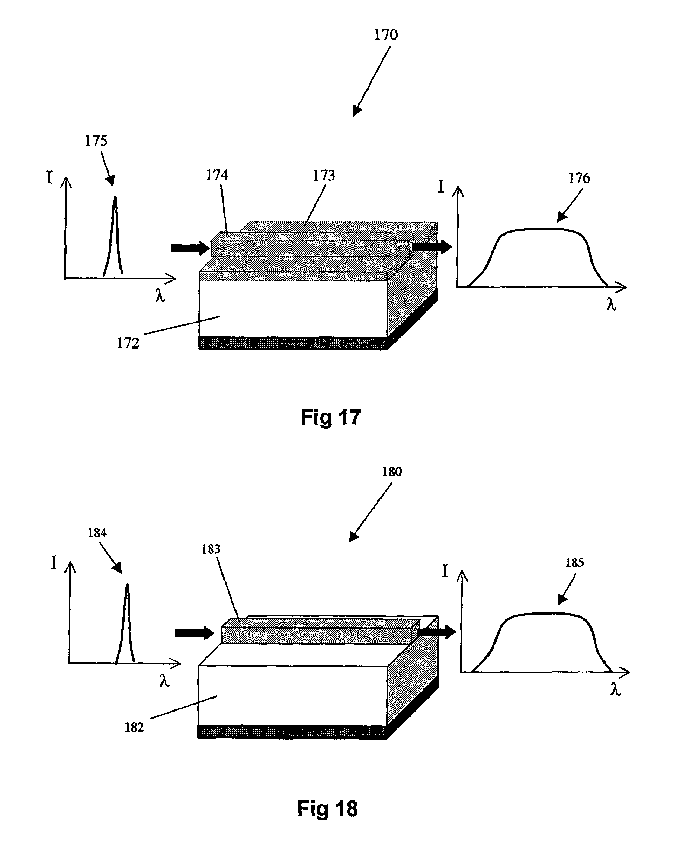

Thus far, only conventional broad area planar waveguides have been considered, which predominantly provide optical confinement in only one dimension, the vertical. Lateral confinement may be provided by employing ridge or rib type planar waveguide structures, as illustrated in Figures 17 and 18. Figure 17 shows a device comprising a buffer 172, core 173 and a core ridge 174 layer formed on a substrate. The device operates in the same manner as the broad area device illustrated in Figure 10. Input pulse 175 is converted in a broad continuum represented by spectrum 176. Figure 18 shows a device comprising a buffer 182 and a core rib 183 layer formed on a substrate. Again, the device operates in the same manner as the broad area device illustrated in Figure 10, with the input pulse 184 non-linearly converted to a broad continuum represented by spectrum 185.

Such structures give rise to higher peak intensity within the guided mode and a correspondingly larger degree of nonlinearity induced in the nonlinear material. This in turn leads to a lower threshold power (pulse energy) requirement for initiating the nonlinear process. Furthermore, a more symmetrical optical mode may be promoted within the waveguide, which is more easily mode matched to other devices, such as optical fiber, when coupling light into and out of the waveguide. The precise dimensions of the structures will determine whether the waveguide is single-mode or multi-mode.

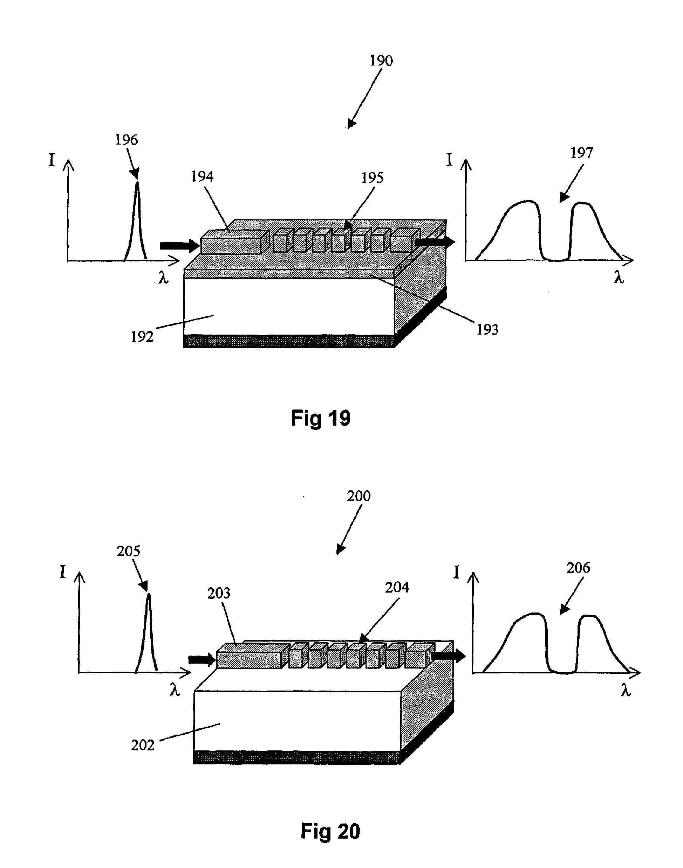

Of course, many of the pre- and post-processing structures applied to the basic broad area planar waveguide structure may also be applied the ridge and rib waveguide embodiments. Figure 19 shows the application of 1-D photonic crystal structures to the ridge waveguide of Figure 17. The structure has the same basic features as the structure of Figure 17, including a buffer layer 192, core layer 193 and core ridge layer 194. The core ridge layer includes a photonic crystal post-processing section 195 formed from a periodic modulation of the core ridge layer. The periodic modulation of the waveguide structure provides the means for filtering of the signal (optical continuum) that is non-linearly generated in a region of the waveguide proximate to the input. The input pulse with narrow spectrum 196 is therefore broadened into a continuum and filtered to produce the spectrum 197, with a central missing waveband.

Figure 20 illustrates the same design applied to a rib waveguide structure 200. The structure includes a buffer layer 202 and a core rib layer 203. The core rib layer includes a photonic crystal section 204 for post processing so that after input pulse 205 has been broadened it is filtered to produce a spectrum 206. The photonic crystal of Figure 19 or 20 may be implemented in rod or slab form and need not be periodic, as indicated, but have a varying mark-space ratio according to particular design parameters. The intervening "spaces" may remain air-filled orcould be filled with other materials having suitable refractive index properties.

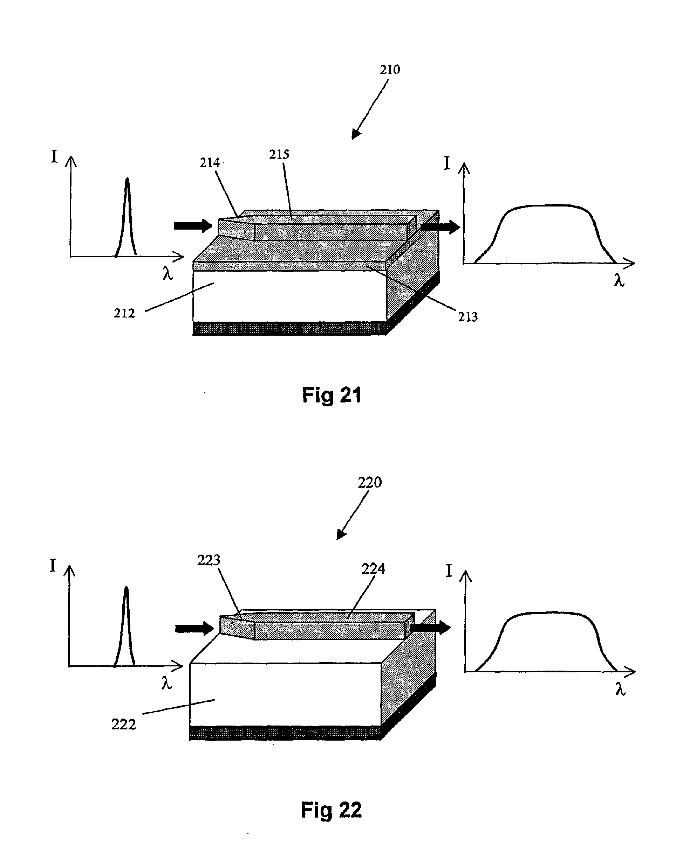

Figure 21 illustrates a ridge embodiment 210 having a horizontally tapered input region 214 for spot size conversion and improved optical coupling efficiency. A vertical taper may also be employed. The structure 210 includes a buffer layer 212 and a core layer 213. On the core layer 213 is a core ridge layer 215 and it is the ridge layer that is tapered at the input region 214. Figure 22 illustrates the same design applied to a rib structure 220. The structure includes a buffer layer 222 and a core rib layer 224. An input region 223 of the rib layer 224 is horizontally tapered for spot size conversion and improved optical coupling efficiency. A vertical taper may also be employed.

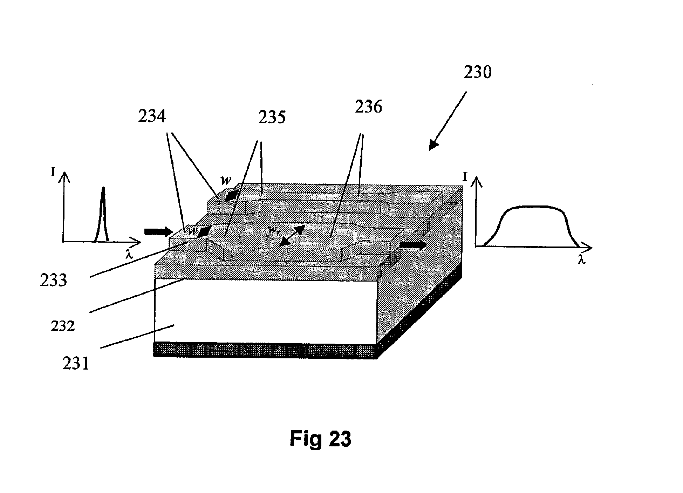

Figure 23 illustrates other types of taper structure that may be implemented in a ridge (or rib) waveguide. Again the basic structure 230 comprises a buffer layer 231, a core layer 232 and a core ridge layer 233. Both of the two core ridges shown provide lateral confinement and have input waveguide regions 234 with the same width w, taper region 235 and central region 236. However, in one waveguide the ridge tapers down laterally to provide a narrower central region, whilst in the other waveguide the ridge tapers up laterally to provide a broader central region, width w,. Optical signals propagating in the two waveguides will experience differing degrees of dispersion in dependence on the width of the ridge in the central region 236. In both cases, the taper is reversed at the output region to return the waveguide to the same width as the input. These types of structures are particularly useful for incorporating the non-linear waveguide within an integrated planar device.

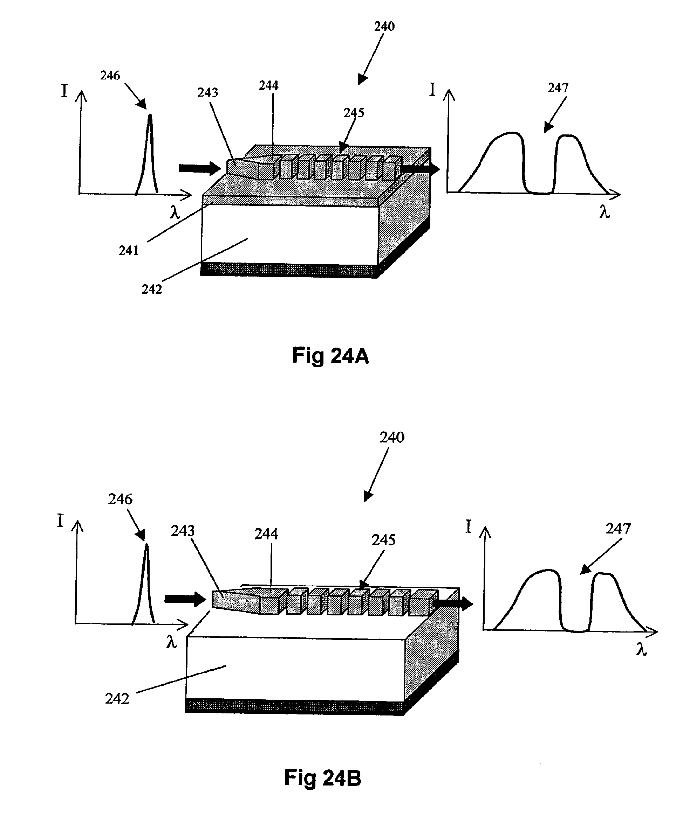

In a manner analogous to that shown in Figure 16, combinations of tapers and photonic crystal structures can be fabricated in both ridge and rib waveguides. Figure 24A illustrates the combination of tapers and photonic crystal structures applied to a ridge waveguide embodiment of the present invention. Figure 24A shows a device 240 including a buffer layer 242, a core layer 241 and a core ridge layer 244. The core ridge layer includes a tapered input section 243, a continuum generation section 244 and a post-processing photonic crystal section 245. As with the basic waveguide embodiment, the tapers provide for improved optical coupling efficiency and pre-processing of the input beam, and the photonic crystal structures provide for post-processing operations on the nonlinearly generated output beam, including filtering. The input 246 is incident on the tapered section 243 and an output is generated with spectrum 247.

Figure 24B illustrates a rib waveguide embodiment equivalent to the ridge waveguide embodiment of Figure 24A. The structure includes a buffer layer 242 and a core rib layer 244. The core rib layer comprises a tapered input section 243, a continuum generation section 244 and a post-processing photonic crystal section 245. As with the basic waveguide embodiment, the tapers provide for improved optical coupling efficiency and pre-processing of the input beam, and the photonic crystal structures provide for post-processing operations on the nonlinearly generated output beam, including filtering. The input 246 is incident on the tapered section 243 and an output is generated with spectrum 247.

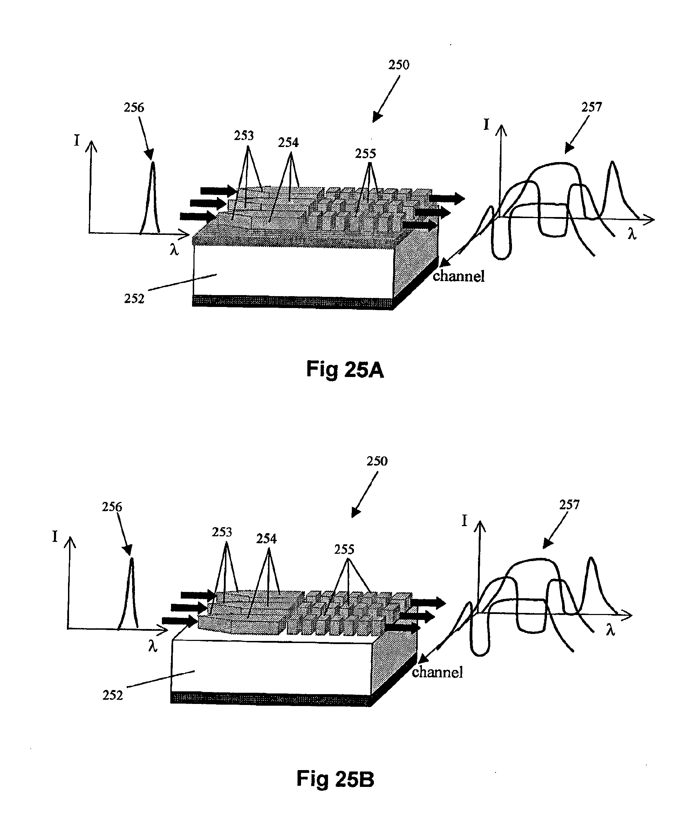

The geometry of the ridge and rib waveguide structures naturally lend themselves to the construction of a single chip device with multiple waveguide channels. Figure 25A illustrates the concept with a three channel ridge waveguide device 250, which also incorporates tapered input regions 253 and photonic crystal structured output regions 255. Unlike the broad area waveguide device of Figure 16, which has two tapered input regions, the device of Figure 25A comprises three distinct waveguiding channels 254 on a buffer layer 252, each with a separate input taper 253 and photonic crystal structure 255. Typically, the device would be used with three separate input beams 256, possibly derived from three separate sources. If the three beams are derived from a common source, the three photonic crystals 255 can be designed with different transfer functions so as to sample different wavelength ranges from the continua generated in each of the channels 254. In this way three distinct output spectra 257 are produced. By adjusting the spacing between the ridges/ ribs, a degree of cross-talk can be introduced, if desired. Alternatively, the optical input to the three channels can be a single beam in a mode that extends across all three input taper regions. Figure 25B illustrates the same three channel device implemented with rib type waveguides.

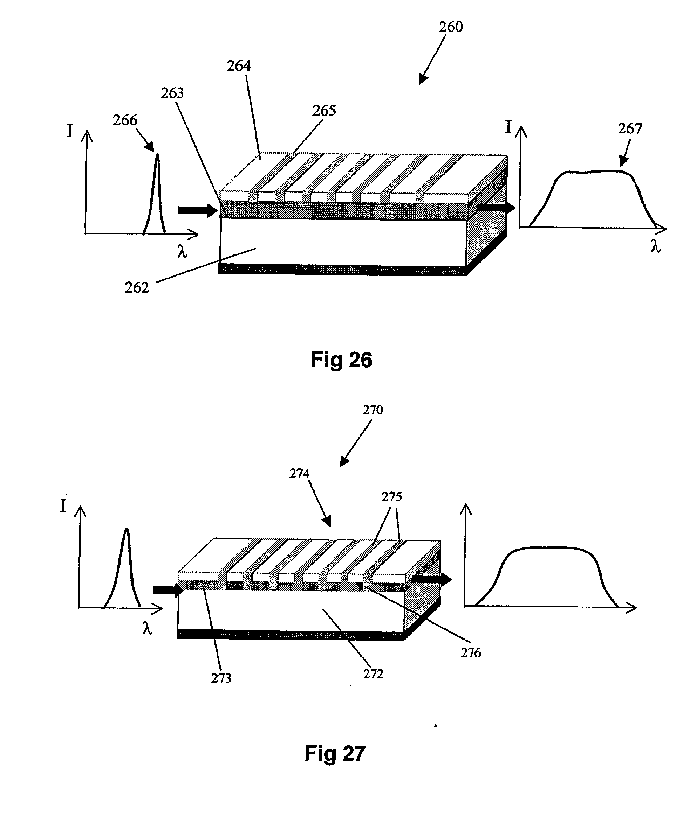

A further embodiment of the present invention incorporates a structure within the region of the planar waveguide where the signal is nonlinearly generated, the structure being designed to modify the local dispersion characteristics of the waveguide in a predetermined way. Figure 26 shows an example of this embodiment, in which the structure 260 comprises a 1-D photonic crystal 265 located in the cladding layer 264. The structure includes a buffer layer 262 and a core layer 263 on which the cladding layer lies. The input 266 is converted into a continuum 267 in the core layer 263 whilst the photonic crystal structure may be designed to modify the dispersion of the whole waveguide so as to lie in the normal, zero or anomalous dispersion regimes at the central wavelength of the input pump beam. Alternatively, the structure may be designed to yield a specific dispersion, such as zero dispersion, at regular points along the waveguide. This latter example is particularly useful for minimizing dispersion induced increase in pulse duration, which would otherwise lead to reduced peak power. Figure 27 illustrates a similar structure 270 to that shown Figure 26, which includes a buffer layer 272, a core layer 273 and a cladding layer 274. Here, the photonic crystal 275 is formed from slabs 276 located in both the cladding layer and the core layer.

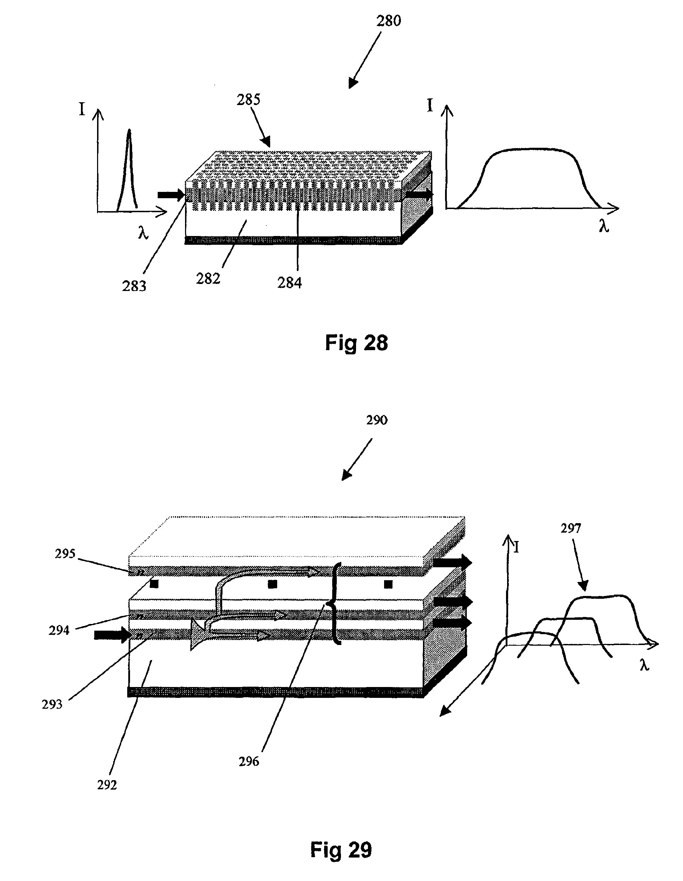

Furthermore, operating near the zero dispersion point can lead to broader continuum generation. Figure 28 illustrates an example of this embodiment 280 having a 2-D photonic crystal structure 284 that extends from the cladding layer 285, through the core layer 283 and into the buffer layer 282. The 2-D structure permits additional functionality such as beam shaping within the generating region.

An alternative device structure for modifying the dispersion characteristics of the waveguide is a multilayered structure 290, as illustrated in Figure 29. Here, the "core" 296 comprises alternating layers 293, 294, 295 of high and low refractive index ($n_1$, $n_2$... $n_n$) on a buffer layer 292. The dimensions and materials used for each layer are calculated according to the desired dispersion characteristics. In this manner, as shown, three different spectral outputs can be obtained from a single input.

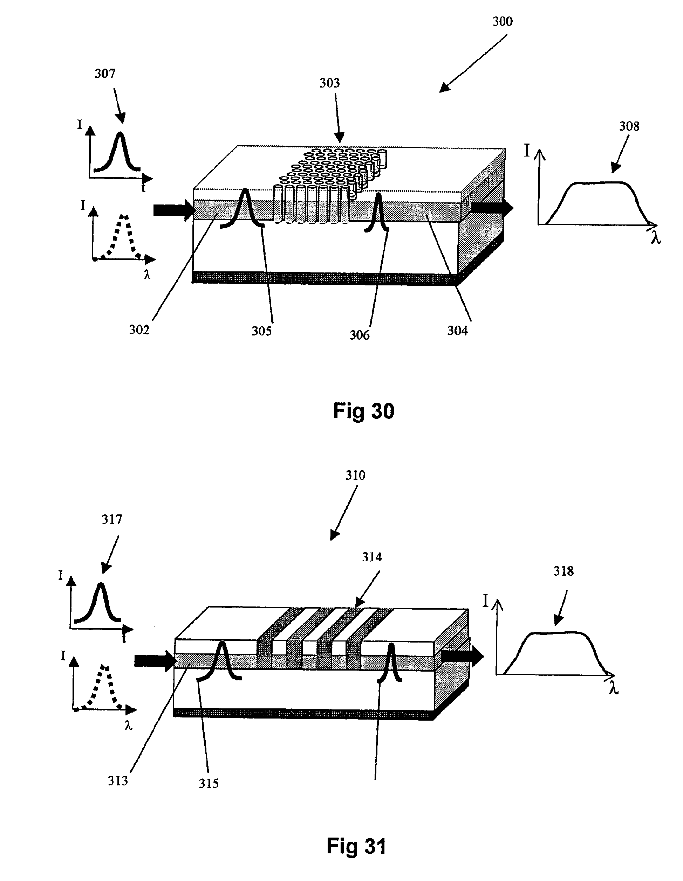

As has been described previously, in relation to tapers, the planar waveguide device may comprise integrated structures for the pre-processing of the optical input signal prior to nonlinear generation of the output signal. In the context of a short pump pulse input, one particularly useful function provided by such structure is on-chip pulse compression. Figures 30 and 31 illustrate two examples of this embodiment based on a broad area planar waveguide according to the present invention. Pulse compression is performed by a region of the waveguide having a photonic crystal structure.

Figure 30 shows an example 300 with a 2-D photonic crystal 303 extending through a core layer 302. Here, the photonic crystal is designed to impart the appropriate phase advance or delay to the different wavelength components of the input beam spectrum 307, in order to give rise to a compression in the time domain. Figure 30 shows the input pulse 305 delayed by the photonic crystal 303 to produce compressed pulse 306. The compressed pulse then passes through the rest of the core 304 and a continuum 308 is generated.

Figure 31 shows an example of a broad area planar waveguide 310 with a 1-D photonic crystal 314 extending through a core layer 313. As with the photonic crystal shown Figure 15, different materials are used in the core layer and the cladding layer. The photonic crystal is designed to impart the appropriate phase advance or delay to the different wavelength components of the input beam spectrum 317, in order to give rise to a compression in the time domain. Figure 31 shows the input pulse 315 advanced by the photonic crystal section 314 to produce compressed pulse 316. The compressed pulse then passes through the rest of the core and a continuum 318 is generated.

The pulse compression described above may simply be for the purposes of increasing peak power in the pulse in order to induce a stronger nonlinear effect in the continuum generation section of the core. Alternatively, or in addition, the pulse compression may be a pre-processing of the pulse to compensate for dispersion effects on propagation through the remainder of the waveguide device. Of course, this pre-processing function may be applied to any of the embodiments described previously.

We now turn our attention to an application of the optical continuum generated in a planar waveguide according to the present invention. In particular the integration of a CG waveguide in a device for application to Optical Coherence Tomography (OCT). OCT is a relatively recent technique for performing optical ranging in biological tissue to determine local variations in the structure and is similar to ultrasound imaging, but uses near-infrared optical radiation. Optical ranging has been widely used in telecommunications for locating faults or defects in optical fibers by sending optical pulses through the fiber and measuring the time delay between the original pulse and a reflected pulse. However, due to the velocity of light, the time delay between original and reflected pulses cannot be measured directly, and so an interferometric technique is used.

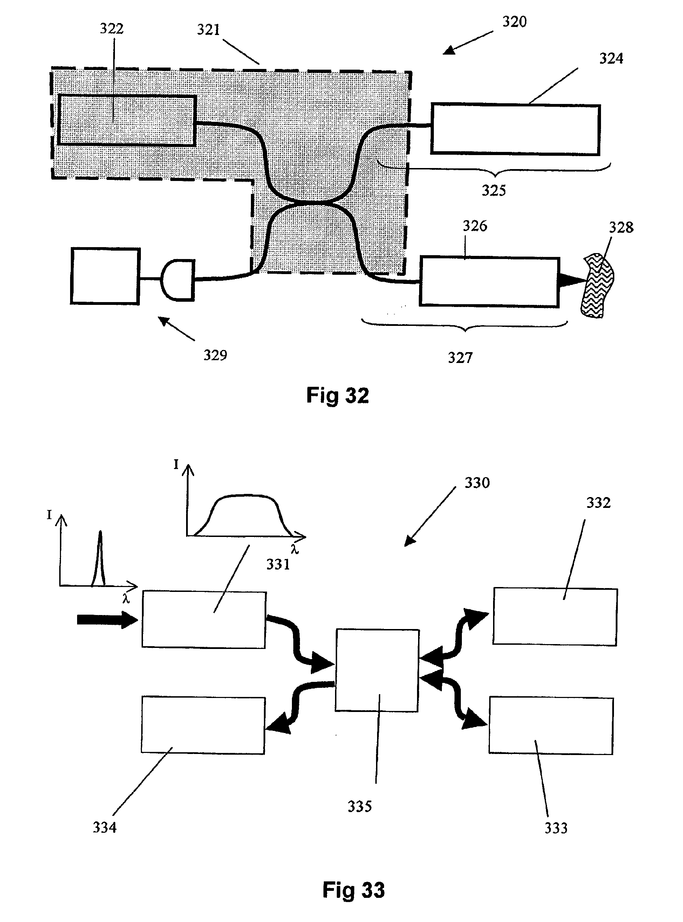

One suitable method is low coherence interferometry, or coherence domain reflectometry, performed using a Michelson type interferometer. Figure 32 shows a schematic diagram of an optical fibre based Micheson Interferometer (MI) system 320 suitable for OCT. The main interferometer region 321 includes a low coherence source 322 and a beam splitter 323, which is ideally a 50:50 (3dB) intensity splitter. Low coherence radiation from the source 322 is coupled into an optical fibre and is split by the splitter 323 to provide signals for each of a reference arm 325 and a signal arm 327. The reference arm 325 includes a reflector and an instrument for varying (scanning) the optical length of the reference arm, either by varying the actual or effective physical path length or refractive index. The signal arm 327 includes an instrument for delivering the beam to the sample specimen 328 under test. The optical signals reflected or back scattered from the reference arm 325 and signal arm 327 are recombined at the splitter 232, where they interfere, and the combined signal propagates along a detection arm to a photodetector 329 and any associated diagnostic equipment, such as filter, analogue-to-digital converter and computer.

Axial scanning of the reference arm optical length permits measurement of interference fringes, and associated coherence envelope, formed by interference between the reference and signal beams. From this the time-of-flight and optical ranging information can be deduced. By scanning the beam in the transverse directions, horizontal and vertical, a two dimensional image may be built up. Axial scanning gives depth information and the detected beam intensity gives further information about the composition of the sample. In this way, a data array of up to four-dimensions may be built that represents the optical backscattering from the specimen sample.

A key feature of this technique is that the axial (depth) and transverse (lateral) resolution are independent. The axial resolution is determined by the coherence length of the source of the source and is inversely proportional to the spectral bandwidth. For an optical source with a Gaussian-shaped spectral distribution, the axial resolution is given by

$$\Delta z = \frac{2\ln 2}{\pi} \cdot \frac{\lambda^2}{\Delta \lambda}$$

where $\lambda$ is the centre wavelength and $\Delta\lambda$ is the spectral bandwidth. Thus, for high axial resolution, a wide bandwidth and hence low coherence source is required, which makes optical continua an attractive option. For application to biological samples another consideration is the degree of scatter, which is stronger at shorter wavelengths, and absorption, which is stronger at longer wavelengths. Thus, an optimum "biological window" exists in the near infrared between 800nm and 1500nm which, as shown in Figure 9A, makes optical continua generated in planar waveguides of the present invention particularly well suited. Finally, transverse resolution $\Delta x$ is determined by focused spot size and is given by

$$\Delta x \approx \frac{4\lambda}{\pi} \cdot \frac{f}{d}$$

where $d$ is the diameter of the beam size incident on a lens of focal length $f$. As $\lambda$ is largely fixed, $\Delta x$ can be varied by choosing suitable values of $f$ and $d$, although a trade-off exists between transverse resolution and depth of focus ($\propto \Delta x^2/\lambda$).

Figure 33 illustrates the broad concept of an MI based OCT system 330, which comprises an optical continuum generation arm 331, a reference arm 332, signal arm 333, detection arm 334 and splitter 335. As shown, the CG arm 331 generates an optical continuum from a narrower band input. Although, an optical continuum generator according to the present invention can be used as a stand alone source for a variety of implementations of the system shown in Figure 33, the geometry of the planar waveguide lends itself to simple monolithic integration of many of the components of the system. In particular, the main interferometer region 321 shown in Figure 32, can be formed as a planar photonic integrated circuit on a single chip.

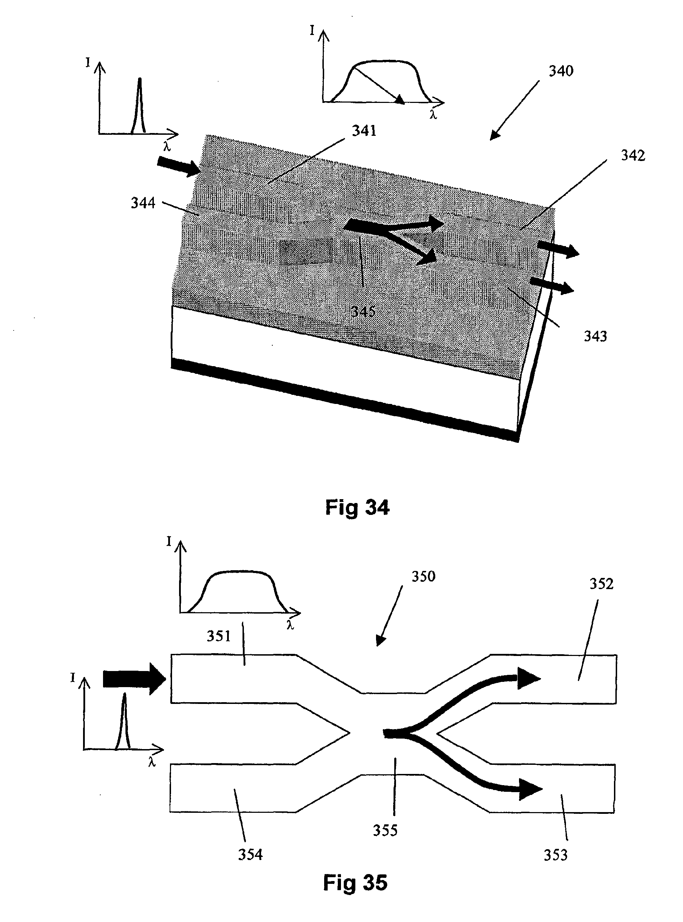

Figure 34 shows one embodiment of such a device 340, which implement each of the CG arm 341, reference arm 342, signal arm 343 and detection arm 344 as ridge waveguides and the splitter 335 as a back-to-back Y-type ridge waveguide splitter/combiner. Figure 35 shows a schematic plan view of the ridge geometry. As with previous embodiments of the planar waveguide continuum generator, the CG arm 341,351 is pumped with short intense pulses of relatively narrow bandwidth, which drive the nonlinear process that generates an optical continuum that is confined and waveguided towards the splitter 345,355. Of course, very many variations and functionality may be built into the device. For example, the arrangement shown in Figure 23 may be employed to provide two arms of different width.

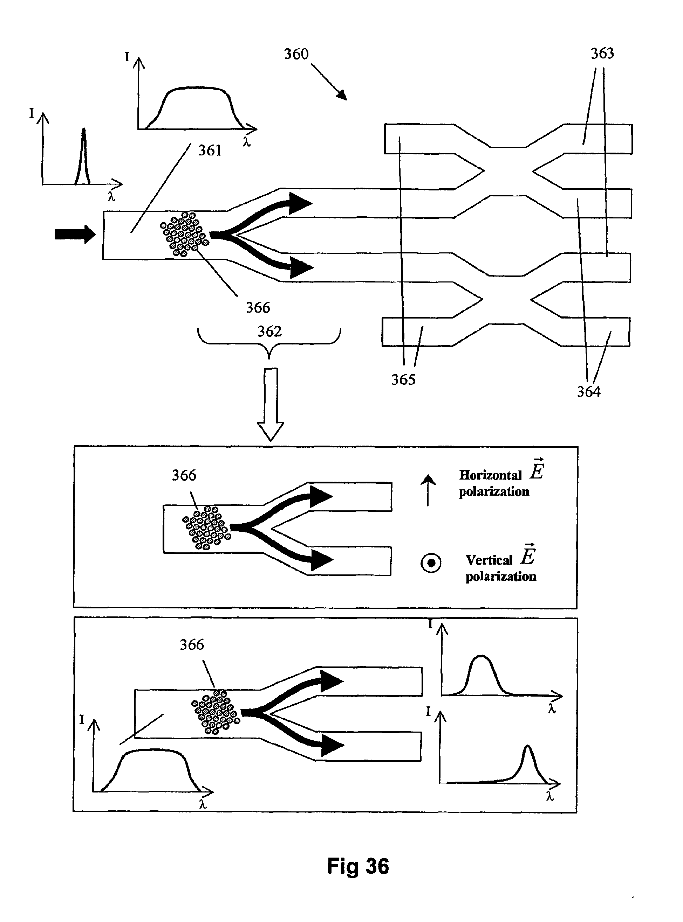

Figure 36 shows a more complex variant 360 in which a continuum is generated in a waveguide 361 and routed by the two arms of a Y-branch splitter 362 to provide a CG beam as input to two separate MI arrangements, each having a reference arm 363, signal arm 364 and detection arm 365. The nature of the splitting, especially intensity ratio, may be controlled by the geometry of the Y-branch 362 or any other structure incorporated in it. Figure 36 shows Y-branch structure 362 which incorporates a photonic crystal structure 366 located between the CG region 361 and the Y-branch. The two insets to Figure 36 illustrate that the photonic crystal 366 of the Y-branch structure may be designed to split the CG signal according to polarization state or wavelength to provide independent and synchronized inputs to the two interferometers. Polarization splitting facilitates simultaneous OCT probing of samples using orthogonally polarized light of the same waveband. On the other hand, wavelength splitting facilitates simultaneous OCT probing of samples using light in different wavebands. For example, a continuum generated in a ridge waveguide with a 1550nm pump contains two Gaussian-like bands at 1040nm and 1300nm, which are the best wavelengths for OCT, as they exhibit minimum absorption by water, melanin and haemoglobin and hence have a bigger penetration depth. The two wavebands can be carved out of the continuum for splitting at the Y-branch by suitable design of the photonic crystal structure 366.

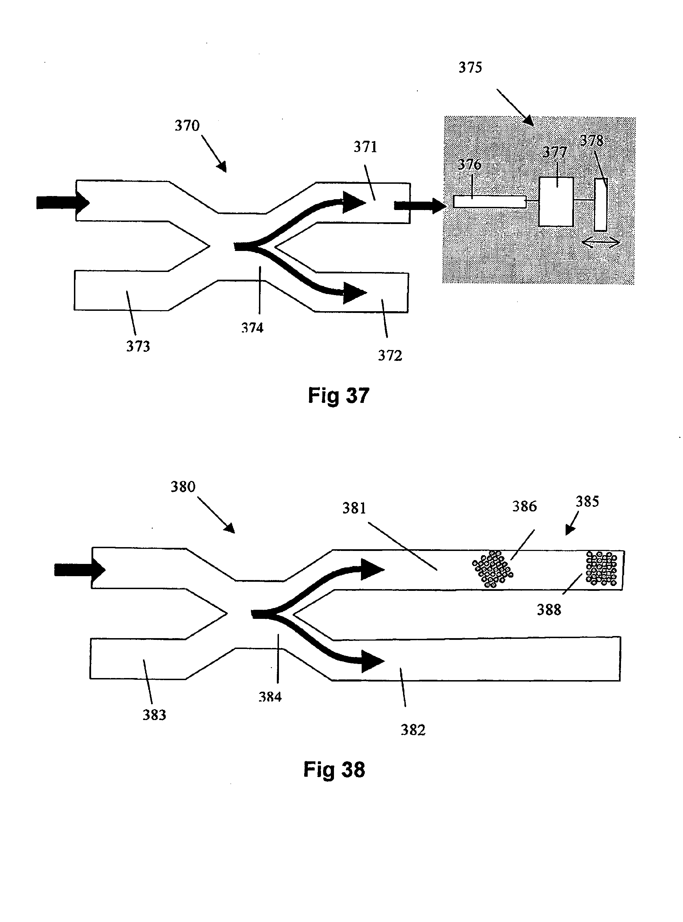

As described previously with reference to Figure 32, generally only the main interferometer region 321 is integrated on a single chip. In this case the photonic integrated circuit (PIC) must be optically coupled to the other necessary components. Figure 37 shows the PIC 370, with reference arm 371, signal arm 372, detection arm 373 and splitter/combiner 374 and also examples of the off-chip components 375 for the reference arm, including fibre 376, dispersion compensator 377 and scanning mirror 378. An optical fibre 376 is employed for collection, optical delay and onward transmission of the reference beam and a mirror 378 is mechanically scanned to vary the optical path length of the reference arm. A dispersion compensator 377 is employed to compensate for dispersion experienced by the various wavelength components of the reference signal while propagating along the reference arm.

Figure 38 shows a variation 380 of the OCT device shown in Figure 37, in which the necessary components 385 for the reference arm 381 are integrated with the rest of the structure. Here, the reference arm 381 and signal arm 382 waveguides are extended, and the reference arm includes two photonic crystal structures. One photonic crystal 386 acts as both an optical delay line and a dispersion compensator, while the other photonic crystal 388 acts as the back-reflecting mirror. Dispersion compensation and optical delay are tuned by tuning the refractive index of the filled photonic crystals. Dynamic tuning permits axial scanning of the optical path length of the reference arm.

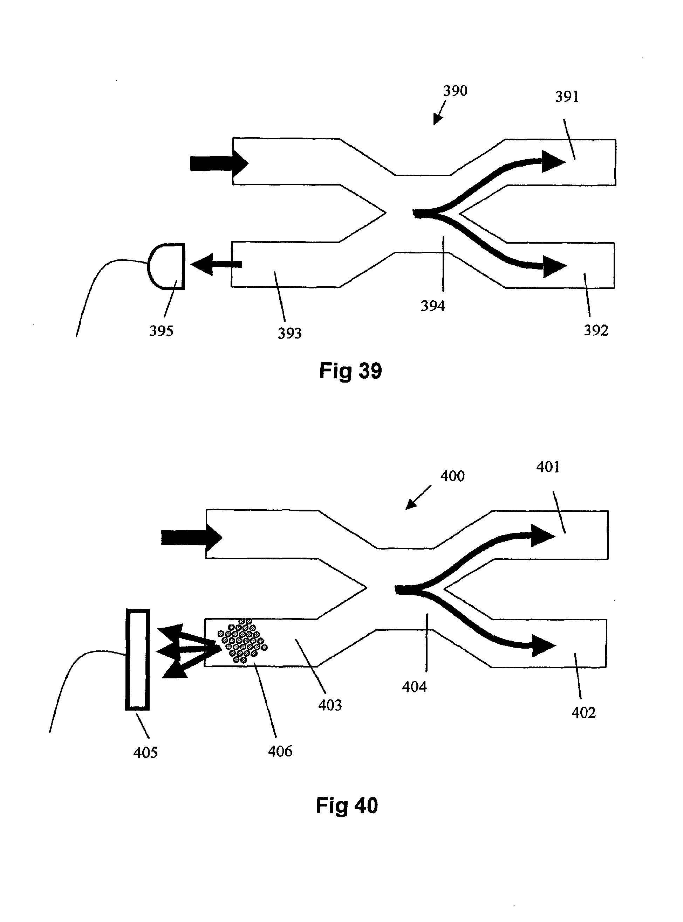

Figure 39 again shows the basic PIC structure 390, with reference arm 391, signal arm 392, detection arm 393 and splitter/combiner 394. Also shown here is a stand-alone photodetector 395 for off-chip detection of the optical signal propagating in the detection arm 393. In general, the photodetector will be connected to suitable electronic circuitry for processing of the electrical signal produced by the photodetector. This will typically include bandpass filter, envelope detector and analogue-to-digital converter. The resulting signal is fed to a computer for final data analysis and display, which may include a grey-scale or false-colour 2-D image, or tomogram, of the optical backscatter signal obtained from the specimen. However, by analysing the full interferometric data in more detail, other types of tomogram may be displayed, which show spectrographic information or information about the motion of scatter centers due to liquid flow or tissue movement.

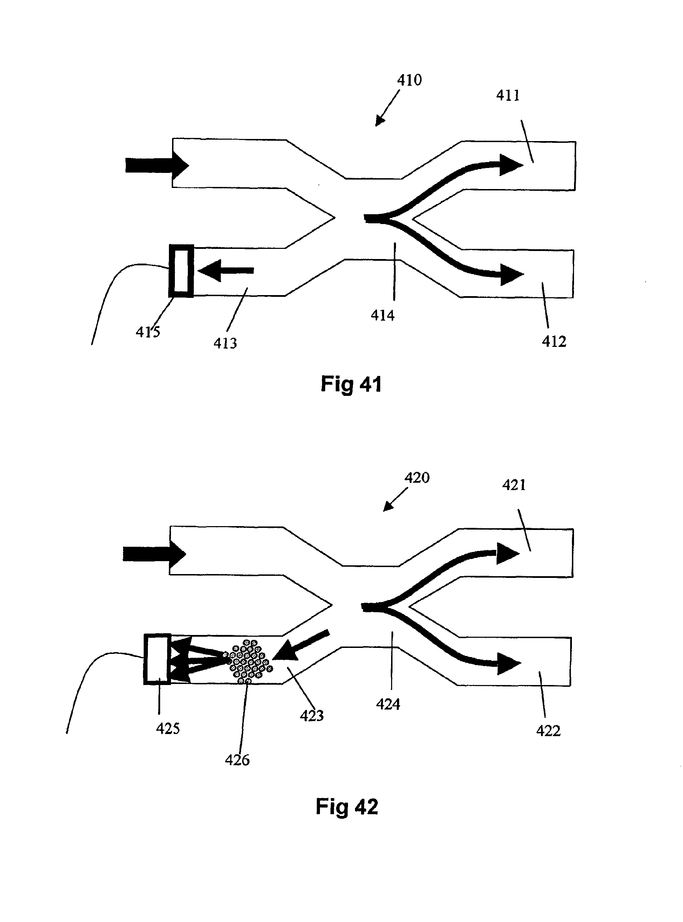

Such data analysis can be simplified by including further functionality in the detection arm, such as a dispersive element. Figure 40 shows the basic PIC structure 400, in which the detection arm 403 has an integral photonic crystal structure designed to disperse the signal into three wavelength channels. The three optical signals so derived are then detected by a suitable off-chip photodector 405 and the resulting electrical signal(s) processed. Of course, the photodetecting element may be integrated with the rest of the PIC on a single chip to form the final part of the detection arm. Figure 40 shows a similar arrangement 410 to Figure 39, but with the photodetector 415 located on-chip and forming the end of the integrated detection arm. Figure 42 shows the arrangement 420 of Figure 40, but again with an integrated on-chip photodetector 425. It is noted that the location of the dispersive photonic crystal structure 426 within the detection arm 423 is adjusted for optimum coupling of the three channels to the photodetector 425.

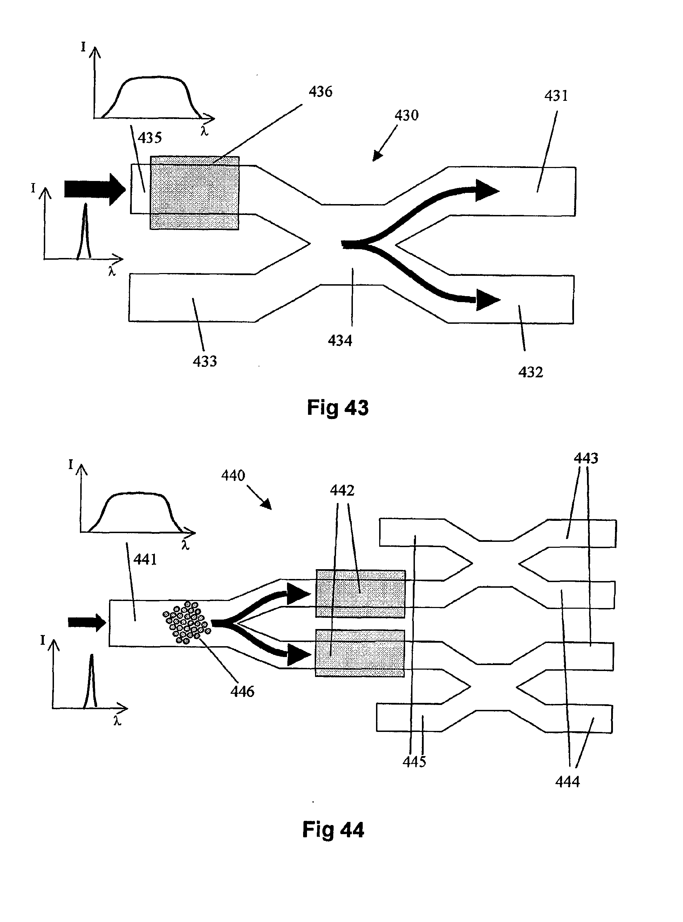

A final addition to the MI-based OCT systems described above is the use of modulation, which may be implemented by an integrated on-chip modulator. Figure 43 shows the familiar PIC interferometer with a modulator 436 integrated in the CG source arm 435. Intensity modulators can easily be realized in such a PIC, by employing phenomena such as electroabsorption, for example. The modulator region is typically driven by a suitable voltage signal applied to an electrode located on the modulator region. In the device shown in Figure 43, the continuum is largely generated in input region 435 and then modulated by the modulator 435. This provides greater functionality for OCT by allowing more control over the form of the optical signal with which the sample is probed. Furthermore, the modulation may provide a signature element to the optical signal which aids in its detection. The functionality of the OCT device shown in Figure 36 may also be enhanced by the use of modulation. Figure 44 shows a similar arrangement 440, but in which a modulator 442 is built into each of the arms of the Y-branch leading to the two interferometers. The modulators 442 can provide either phase or amplitude modulation and may be designed according to the operation of the photonic crystal structure 446 in the continuum arm 441. Independent modulation of the continuum signals entering the two interferometers significantly enhances the functionality of OCT detection. In particular, the use of different modulation frequencies permits different types of simultaneous scanning.

The majority of the foregoing discussion has centered on the ability of the present invention to generate large bandwidth, particularly in the context of optical continuum generation, and its manipulation and application, such as in OCT. However, another application of the planar waveguide according to the present invention is in parametric devices such as the optical parametric oscillator (OPO) and optical parametric amplifier (OPA). Such devices are used to generate or amplify one or more signals at a discrete wavelength from a input pump beam at a different wavelength. Typically, in a third order parametric process, two output beams are generated, the signal (s) and idler (i), from the single input pump (p) beam. The total photon energy is conserved in the process such that the pump, $\omega_p$, signal, $\omega_s$, and idler, $\omega_i$, frequencies are related by

$$\omega_p = \omega_s + \omega_i$$

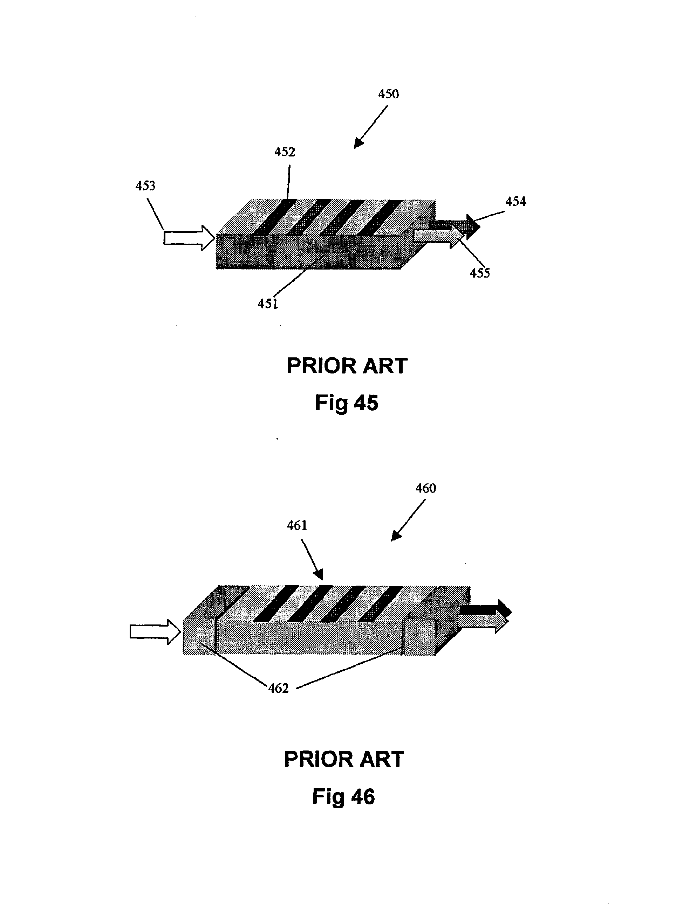

Each signal typically has a relatively narrow bandwidth centered around these frequencies. However, the wavelengths of the signal and idler can be tuned over a broad range by satisfying the appropriate phase matching condition. In the case of bulk nonlinear crystals, this is often achieved by rotation of the crystal. In the case of modern planar devices, quasi phase-matching can be achieved by periodic poling of the material. Figure 45 shows a known waveguide device 450 of this type based on periodically poled Lithium Niobate ($Li_2O_3$), also known as PPLN. A single frequency input beam 453 is converted into a signal wavelength 454 and an idlerwavelength 455 by the waveguide 451. It is not shown in Figure 45 but the periodically poled regions 452 may be angled and tapered. This permits tuning of the signal and idler wavelengths by translating the waveguide. In addition to spontaneous parametric generation, the device can act as an OPA, whereby a second input signal at either the signal or idler wavelength is amplified.

Another common parametric device is the OPO, which comprises a suitable nonlinear material (parametric generator) with optical feedback provided at either the signal or idler wavelength, or both. A certain degree of feedback may also be provided at the pump wavelength. In an OPO, the presence of optical feedback, togetherwith the parametric gain provided by the pump beam, gives rise to a laser-like growth in the signal being fed back. The feedback may be in the form of a linear cavity or a ring (loop) cavity. As with a laser, by making one of the feedback elements partially transmitting at the resonating wavelength, an optical output can be obtained, which can be tuned by employing tunable wavelength selective feedback element. Figure 46 shows a known PPLN waveguide-based OPO 460, which utilizes distributed Bragg gratings 462 at each end of the waveguide 461 to provide optical feedback in a linear cavity.

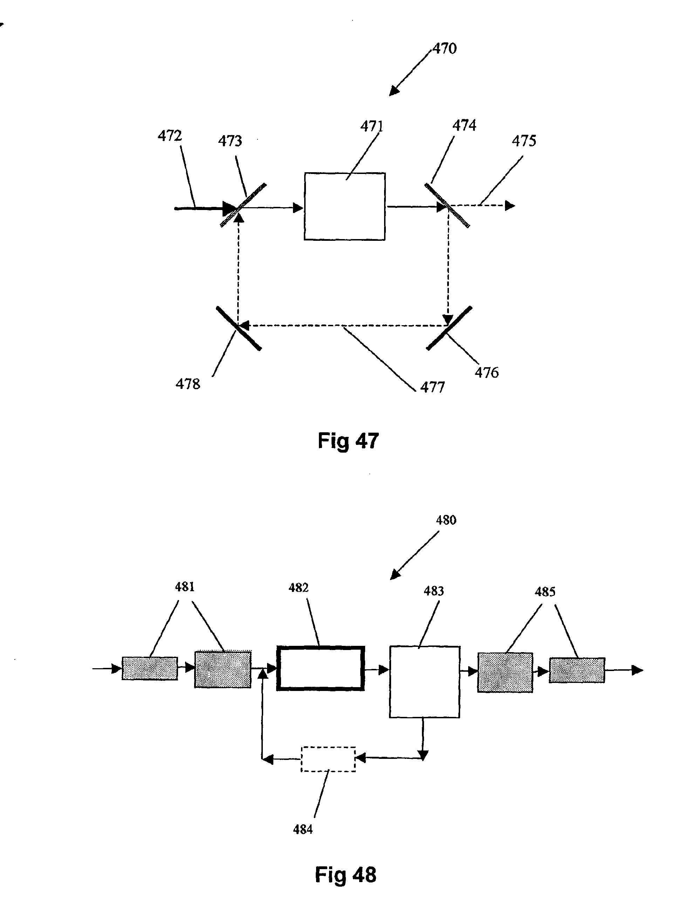

Figure 47 shows the basic concept of an OPO 470 based on a planar waveguide according to the present invention. The core component is the waveguide region 471, in which an optical output is nonlinearly generated, whilst simultaneously the accessible nonlinearly-generated bandwidth is enhanced. This region provides the parametric generation of the signal and idler, which are tunable over much of the broad accessible bandwidth. In order to achieve optical parametric oscillation, the key addition to the basic device is the provision of optical feedback to form a cavity. This may be a linear cavity with discrete or distributed end reflectors, or a ring cavity as shown in Figure 47, also comprising discrete or distributed reflectors. Figure 47 shows an input optical beam 472 incident on a partial reflector 473. Reflector 473 passes the signal 472 to the waveguide region 471. The output from the waveguide region 471 is incident on partial reflector 474. The reflector 474 is designed to be partially transmitting at the resonating wavelength to provide an output 475. A portion of the output is reflected by reflector 474 around a loop 477 including reflectors 476 and 478 back to the reflector 473. The reflected signal is then fed back into the waveguide region 471. The signal fed back into the waveguide region 471 is at the wavelength of the input signal. The reflectors 476, 478 themselves may provide the wavelength selectivity or a specific filter may be inserted in the loop 477 to perform this function.

Figure 48 shows a schematic of the basic components for an OPO based on a planar waveguide according to the present invention. The planar waveguide device may incorporate any of the on-chip features described previously, input including tapers, ribs/ridges, pulse compression, dispersion control 481 and post-processing such as filtering and output tapers 485. The waveguide region is indicated at 482 and a partial/selective reflector or splitter is shown at 483. The feedback loop is shown with a specific filter 484.

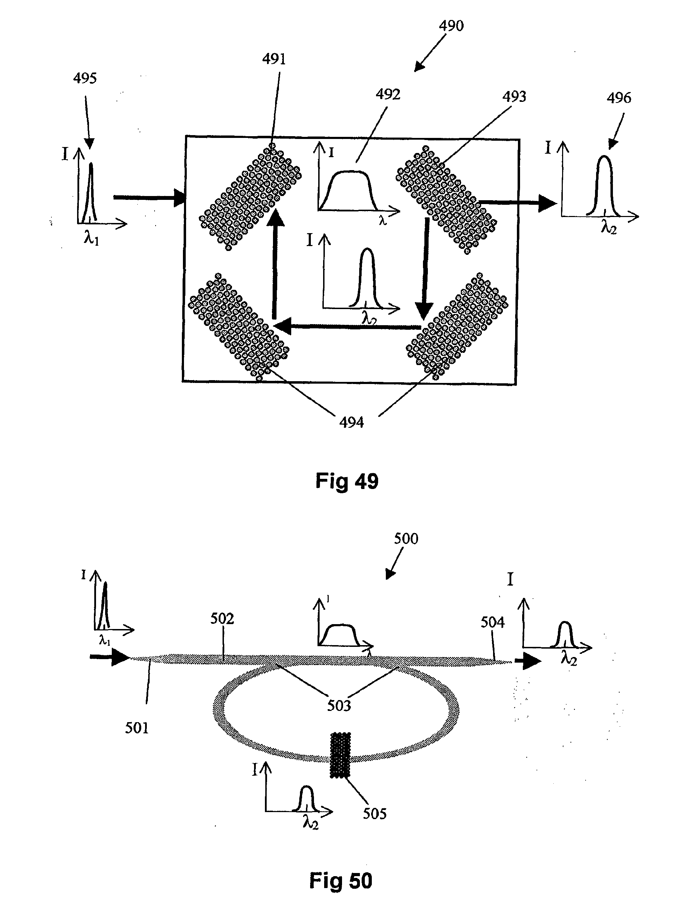

Figure 49 shows an embodiment of an OPO 490 according to the present invention comprising a compact planar waveguide 492 with feedback provided by four discrete 1-D or 2-D photonic crystals 491, 493, 494. One of the four crystals 491 is designed to transmit the input 495 and another of the four crystals 493 is designed to be partially transmitting at the resonating wavelength in order to provide an output 496. Figure 50 shows another embodiment 500 comprising an extended waveguide 502 with input 501 and output 504 tapers, and on-chip beam splitters 503 to couple light out into the feedback loop. Wavelength selectivity and tuning is provided by photonic crystal 505 located within the feedback loop.

Optical parametric amplification of a second input beam at the signal or idler wavelength is also possible using a planar waveguide according to the present invention. The arrangement is much the same as the OPO above but without any feedback mechanism. In all parametric device embodiments it is preferred that the nonlinearly generating region comprises a structure to modify the dispersion of the planar waveguide. This may be provided by photonic crystal structures or multilayer structures as described above, or any other suitable structure. In order for accurate phase-matching and efficient operation to be achieved, it is preferred that the total dispersion is in the anomalous regime for the wavelengths of interest.

In summary, the present invention provides an extremely flexible nonlinear device, which substantially enhances the bandwidth accessible in the nonlinear optical interaction. The use of a planar waveguide formed from material having a high linear and nonlinear refractive index combines the benefit of strong optical confinement and high intensity with high material nonlinearity. The device may be pumped by a variety of standalone sources. Typically these are ultrashort pulse laser sources. The net result is an extremely efficient nonlinear interaction with a considerably enhanced accessible bandwidth. The device has particular application in optical continuum and supercontinuum generation, but also in broadly tunable parametric devices. The geometry of the planar device makes it particularly amenable to the integration of other functionality on the same chip and also compatible with modern photonic integrated circuits. As has been described, there are very many embellishments that can be made to the basic device to incorporate added functionality. In particular, the use of tapers, ridge and rib type waveguides, and other modifying structures for pulse compression, dispersion control and filtering (particularly photonic crystal structures) has been shown to improve greatly the performance and range of applications of the device. Furthermore, the planar waveguide, as optical continuum generator, may be integrated in a variety of larger photonic devices. A particular example that has been described is a PIC implemented Michelson interferometer with a continuum broadband source, which finds great application in optical coherence tomography by low coherence interferometry.

## Claims

1.   An optically-pumped device comprising a non-linear optical device (5,75) and a laser source (2,71) generating ultra-short laser pulses (74), the non-linear optical device (5,75) comprising:

a planar optical waveguide (10) optically coupled to the laser source (2,71) for receiving the ultra-short laser pulses (74) as an optical input (3), the planar optical waveguide (10) including:

a core layer (13) comprising a deposited thin film layer of material having a refractive index $n_c$ of at least 1.7; and,

a buffer layer (12) with refractive index $n_s$ such that $n_c > n_s$,

wherein at least a section (4) of the planar optical waveguide (10) is operable to generate by means of a non-linear optical process an optical output (6,76) from at least a portion of the optical input (3,74), the optical output (6,76) having a wavelength within an accessible bandwidth of the non-linear optical device (5,75) and the optical input (3,74) having an input bandwidth,
**characterised in that** the core layer (13) comprises an oxide of a metal selected from tantalum, hafnium, zirconium, titanium and aluminium, whereby the ratio of the accessible bandwidth of the non-linear optical device (5,75) to the input bandwidth is at least 4, the term "bandwidth" being defined here as the wavelength interval beyond which the spectral radiant intensity remains below a level of -30 decibels (0.001) of the maximum value.

2. An optically-pumped device according to claim 1, wherein the ratio of the accessible bandwidth to the input bandwidth is at least 10.

3. An optically-pumped device according to claim 1 or claim 2, wherein the core layer (13) is doped with a rare earth element.

4. An optically-pumped device according to claim 1 claim 2, wherein the core layer (13) of the planar optical waveguide (10) comprises a layer of tantalum pentoxide ($Ta_2O_5$) having a thickness of between approximately 500 nm and 800nm  and the buffer layer (12) comprises a $2\mu m$ thick layer of thermal silicon dioxide ($SiO_2$).

5. An optically-pumped device according to any of claims 1 to 4, wherein the accessible bandwidth is at least 200nm.

6. An optically-pumped device according to any of claims 1 to 4, wherein the accessible bandwidth is at least 500nm.

7. An optically-pumped device according to any preceding claim, wherein the non-linear optical process comprises one or more processes selected from a group which includes self-phase modulation, self-focussing, four-wave mixing, Raman scattering and soliton formation.

8. An optically-pumped device according to any of claims 1 to 7, wherein the planar waveguide (170) comprises a ridge (174).

9. An optically-pumped device according to any of claims 1 to 7, wherein the planar waveguide (180) comprises a rib (183).

10. An optically-pumped device according to any preceding claim, wherein a portion of the planar waveguide (120) is tapered (123).

11. An optically-pumped device according to any preceding claim, wherein a portion of the planar waveguide (140) includes a structure (145), the structure being operative to modify the optical input and/or optical output.

12. An optically-pumped device according to claim 11, wherein the structure comprises a photonic crystal structure (145).

13. An optically-pumped device according to claim 11, wherein the structure comprises a further planar layer (294) disposed on the optical waveguide.

14. An optically-pumped device according to any of claims 11 to 13, wherein the structure (145) is operative to filter the optical input and/or optical output (147).

15. An optically-pumped device according to any of claims 11 to 13, wherein the structure is operative to compress temporally the optical input and/or optical output.

16. An optically-pumped device according to any of claims 11 to 13, wherein the structure is operative to modify the optical dispersion characteristics of the planar optical waveguide.

17. An optically-pumped device according to claim 16, wherein the optical dispersion characteristics of the planar optical waveguide are modified to achieve zero dispersion at points along the waveguide.

**18.** An optically-pumped device according to claim 17, wherein the optical dispersion characteristics of the planar optical waveguide are modified to achieve normal dispersion at a predetermined wavelength.

**19.** An optical continuum source (70) comprising an optically-pumped device according to any preceding claim, wherein the optical output (76) has an optical spectrum comprising an optical continuum over the accessible bandwidth as a result of non-linear broadening of the optical input (3).

**20.** An optical continuum source according to claim 19, wherein the non-linear optical process is seeded with an optical seed input.

**21.** An interferometer (330) comprising:

an optical continuum source (331) according to claim 19 or claim 20;
a reference arm (332); a signal arm (333); a detection arm (334);
a beam splitter (335) optically coupled to the optical continuum source (331), in use, the beam splitter splitting the optical continuum output between the reference arm (332) and the signal arm (333); and,
a beam combiner (135) optically coupled to the detection arm (134), in use, the beam combiner combining optical beams reflected by part of the reference arm and part of the signal arm.

**22.** An interferometer according to claim 21, wherein a single optical component (135) acts as the beam splitter and the beam combiner.

**23.** An interferometer according to claims 21 or 22, wherein the interferometer comprises a photonic integrated circuit (340).

**24.** An interferometer according to any of claims 21 to 23, wherein an arm (381) of the interferometer includes a photonic crystal structure (386).

**25.** A system for performing optical coherence tomography on a sample, the system comprising:

an interferometer (321) according to any of claims 21 to 24, in use, the sample located in the signal arm;
means for varying an optical path length of the reference arm (324); and,
a detector (329) for detecting the recombined optical beam comprising a reflected optical beam from the reference arm and a beam back scattered by the sample in the signal arm.

**26.** An optical parametric oscillator (470) comprising an optically-pumped device according to any of claims 1 to 18 and means for providing optical feedback (476) at a wavelength within the accessible bandwidth.

**27.** An optical parametric oscillator according to claim 26, wherein the optical feedback means is provided at least in part by a photonic structure (494).

**28.** An optical parametric amplifier comprising an optically-pumped device according to any of claims 1 to 18 adapted to receive a further optical input to be amplified at a wavelength within the accessible bandwidth.

**29.** An optical system including an optically-pumped device according to any of claims 1 to 18.

**30.** A method for generating an optical signal comprising the steps of:

providing ultrashort laser pulses (74) from a laser source (71) as an optical input signal (3) at an optical input to a planar optical waveguide (10), wherein said planar optical waveguide (10) includes a core layer (13) comprising a deposited thin film layer of material having a refractive index $n_c$ of at least 1.7, and a buffer layer (12) with refractive index $n_s$ such that $n_c > n_s$;
guiding the optical input signal along the core layer (13) of the planar optical waveguide (10); and,
generating an optical output (6) from at least a portion of the optical input signal (3) by means of a non-linear optical process in at least a section of the planar optical waveguide (10), the optical output (6) having a wavelength within an accessible bandwidth,

**characterised in that** the core layer (13) comprises an oxide of a metal selected from tantalum, hafnium, zirconium, titanium and aluminium, whereby the ratio of the accessible bandwidth to the input bandwidth is at least 4, the term "bandwidth" being defined here as the wavelength interval beyond which the spectral radiant intensity remains below a level of -30 decibels (0.001) of the maximum value.

31. A method according to claim 30, wherein the core layer (13) of the planar optical waveguide (10) comprises a layer of tantalum pentoxide ($Ta_2O_5$) having a thickness of between approximately 500 nm and 800nm and the buffer layer (12) comprises a $2\mu m$ thick layer of thermal silicon dioxide ($SiO_2$).

32. A method according to claim 30 or claim 31, wherein the optical output (6) has an optical spectrum comprising an optical continuum (76) over the accessible bandwidth as a result of non-linear broadening of the optical input signal (3).

**Patentansprüche**

1. Optisch gepumpte Vorrichtung, umfassend eine nichtlineare optische Vorrichtung (5, 75) und eine Laserquelle (2, 71) zur Erzeugung von ultrakurzen Laserimpulsen (74), wobei die nichtlineare optische Vorrichtung (5, 75) umfasst:

   einen optisch mit der Laserquelle (2, 71) gekoppelten planaren Lichtwellenleiter (10) zum Empfang der ultrakurzen Laserimpulse (74) als optischen Eingang (3), wobei der planare Lichtwellenleiter (10) beinhaltet:

   eine Kemschicht (13) aus einer aufgetragenen Dünnschicht-Materiallage mit einer Brechzahl $n_c$ von mindestens 1,7; und
   eine Pufferschicht (12) mit einer Brechzahl $n_s$, die $n_c > n_s$ ergibt,

   wobei mindestens ein Abschnitt (4) des planaren Lichtwellenleiters (10) zur Erzeugung eines optischen Ausgangs (6, 76) mittels eines nichtlinearen optischen Prozesses aus mindestens einem Teil des optischen Eingangs (3, 74) betrieben werden kann, wobei der optiische Ausgang (6, 76) eine Wellenlänge innerhalb einer zugänglichen Bandbreite der nichtlinearen optischen Vorrichtung (5, 75) hat und der optische Eingang (3, 74) eine Eingangsbandbreite hat,

   **dadurch gekennzeichnet, dass** die Kemschicht (13) ein Oxid eines aus Tantal, Hafnium, Zirkonium, Titan und Aluminium ausgewählten Metalls aufweist, wodurch das Verhältnis zwischen der zugänglichen Bandbreite der nichtlinearen optischen Vorrichtung (5, 75) und der Eingangsbandbreite mindestens 4 beträgt und der Begriff "Bandbreite" hier als das das Wellenlängenintervall definiert wird, außerhalb dessen die spektrale Strahlstärke unterhalb eines Werts von -30 Dezibel (0,001) des Maximalwerts bleibt.

2. Optisch gepumpte Vorrichtung nach Anspruch 1, wobei das Verhältnis zwischen der zugänglichen Bandbreite und der Eingangsbandbreite mindestens 10 beträgt.

3. Optisch gepumpte Vorrichtung nach Anspruch 1 oder 2, wobei die Kernschicht (13) mit einem Seltenerdelement dotiert ist.

4. Optisch gepumpte Vorrichtung nach Anspruch 1 oder 2, wobei die Kemschicht (13) des planaren Lichtwellenleiters (10) eine Schicht aus Tantalperoxid ($Ta_2O_5$) mit einer Dicke zwischen ca. 500 nm und 800 nm aufweist und die Pufferschicht (12) eine 2 $\mu m$ dicke Lage aus thermischem Siliziumdioxid ($SiO_2$) aufweist.

5. Optisch gepumpte Vorrichtung nach einem der Ansprüche 1 bis 4, wobei die zugängliche Bandbreite mindestens 200 nm beträgt.

6. Optisch gepumpte Vorrichtung nach einem der Ansprüche 1 bis 4, wobei die zugängliche Bandbreite mindestens 500 nm beträgt.

7. Optisch gepumpte Vorrichtung nach einem der vorhergehenden Ansprüche, wobei der nichtlineare optische Prozess einen oder mehrere aus einer Gruppe bestehend aus Selbstphasenmodulation, Selbstfokussierung, Vierwellenmisching, Raman-Streuung und Soliton-Bildung ausgewählte(n) Prozess(e) umfasst.

8. Optisch gepumpte Vorrichtung nach einem der Ansprüche 1 bis 7, wobei der planare Lichtwellenleiter (170) eine Kante (174) aufweist.

9. Optisch gepumpte Vorrichtung nach einem der Ansprüche 1 bis 7, wobei der planare Lichtwellenleiter (180) eine Rippe (183) aufweist.

10. Optisch gepumpte Vorrichtung nach einem der vorhergehenden Ansprüche, wobei ein Teil des planaren Lichtwellenleiters (120) konisch (123) ist.

11. Optisch gepumpte Vorrichtung nach einem der vorhergehenden Ansprüche, wobei der planare Lichtwellenleiter (140) eine Struktur (145) beinhaltet, die zur Modifizierung des optischen Eingangs und/oder des optischen Ausgangs ausgelegt ist.

12. Optisch gepumpte Vorrichtung nach Anspruch 11, wobei die Struktur eine Photonenkristallstruktur (145) aufweist.

13. Optisch gepumpte Vorrichtung nach Anspruch 11, wobei die Struktur eine weitere auf dem Lichtwellenleiter abgelagerte planare Schicht (294) umfasst.

14. Optisch gepumpte Vorrichtung nach einem der Ansprüche 11, bis 13, wobei die Struktur (145) zum Filtern des optischen Eingangs und/oder des optischen Ausgangs ausgelegt ist (147).

15. Optisch gepumpte Vorrichtung nach einem der Ansprüche 11, bis 13, wobei die Struktur zur vorüberhenenden Komprimierung des optischen Eingangs und/oder des optischen Ausgangs ausgelegt ist.

16. Optisch gepumpte Vorrichtung nach einem der Ansprüche 11, bis 13, wobei die Struktur zur Modifizierung der optischen Streukennlinien des planaren Lichtwellenleiters ausgelegt ist.

17. Optisch gepumpte Vorrichtung nach Anspruch 16, wobei die optischen Streukennlinien des planaren Lichtwellenleiters zur Erhaltung einer Nullstreuung an Punkten entlang dem Lichtwellenleiter modifiziert werden.

18. Optisch gepumpte Vorrichtung nach Anspruch 17, wobei die optischen Streukennlinien des planaren Lichtwellenleiters zur Erhaltung einer normalen Streuung bei einer vorgegebenen Wellenlänge modifiziert werden.

19. Optische Kontinuumquelle (70), umfassend eine optisch gepumpte Vorrichtung nach einem der vorhergehenden Ansprüche, wobei der optische Ausgang (76) ein optisches Spektrum mit einem optischen Kontinuum über die zugängliche Bandbreite infolge der nichtlinearen Verbreiterung des optischen Eingangs (3) umfasst.

20. Optische Kontinuumquelle nach Anspruch 19, wobei der nichtlineare optische Prozess mit einem optischen Impfeingang geimpft wird.

21. Interferometer (330), umfassend:

eine optische Kontinuumquelle (331) nach Anspruch 19 oder 20;
einen Bezugsarm (332); einen Signalarm (333); einen Detektionsarm (334); einen optisch an die optische Kontinuumquelle (335) gekoppelten Strahlenteiler (331), der im Gebrauch den optischen Kontinuumausgang zwischen dem Bezugsarm (332) und dem Signalarm (333) aufteilt; und
einen optisch an den Detektionsarm (134) gekoppelten Strahlenvereiniger (135), der im Gebrauch die von einem Teil des Bezugsarms und einem Teil des Signalarms reflektierten Lichtstrahlen vereinigt.

22. Interferometer nach Anspruch 21, wobei ein einzelnes optisches Bauteil (135) als Strahlenverteiler und Strahlenvereiniger wirkt.

23. Interferometer nach Anspruch 21 oder 22, wobei das Interferometer eine photonische integrierte Schaltung (340) umfasst.

24. Interferometer nach einem der Ansprüche 21 bis 23, wobei ein Arm (381) des Interferometers eine photonische Kristallstruktur (386) beinhaltet.

25. System zur Durchführung einer optischen Kohärenztomografie an einer Probe, umfassend:

ein Interferometer (321) nach einem der Ansprüche 21 bis 24, wobei die Probe im Gebrauch im Signalarm befindlich ist;

Mittel zur Änderung einer optischen Weglänge des Bezugsarms (324); und

einen Detektor (329) zur Detektion des wieder vereinigten Lichstrahls, bestehend aus einem reflektierten Lichstrahl aus dem Bezugsarm und einem von der Probe im Signalarm rückwärtsgetreuten Strahl.

26. Optischer parametrischer Oszillator (470), umfassend eine optisch gepumpte Vorrichtung nach einem der Ansprüche 1 bis 18 und Mittel zur Bereitstellung vom optischem Feedback (476) bei einer Wellenlänge innerhalb der zugänglichen Bandbreite.

27. Optischer parametrischer Oszillator nach Anspruch 26, wobei das Mittel zum optischen Feedback mindestens teilweise von einer Photonenstruktur (494) bereitgestellt wird.

28. Optischer parametrischer Verstärker, umfassend eine optisch gepumpte Vorrichtung nach einem der Ansprüche 1 bis 18, der zum Empfang eines weiteren optischen Eingangs zur Verstärkung bei einer Wellenlänge innerhalb der zugänglichen Bandbreite ausgelegt ist.

29. Optisches System mit einer optisch gepumpten Vorrichtung nach einem der Ansprüche 1 bis 18.

30. Verfahren zur Erzeugung eines optischen Signals, umfassend die Schritte:

der Bereitstellung von ultrakurzen Laserimpulsen (74) aus einer Laserquelle (71) als optisches Eingangssignal (3) bei einem optischen Eingang in einen planaren Lichtwellenleiter (10), wobei der basagte planare Lichtwellenleiter (10) eine Kernschicht (13) aus einer aufgetragenen Dünnschicht-Materiallage mit einer Brechzahl $n_c$ von mindestens 1,7 und eine Pufferschicht (12) mit einer Brechzahl $n_s$, die $n_c > n_s$ ergibt, umfasst;

der Führung des optischen Eingangssignals entlang der Kernschicht (13) des planaren Lichtwellenleiters (10); und

der Erzeugung eines optischen Ausgangs (6) aus mindestens einem Teil des optischen Eingangssignals (3) mittels eines nichtlinearen optischen Verfahrens in mindestens einem Abschnitt des planaren Lichtwellenleiters (10), wobei der optische Ausgang (6) eine Wellenlänge innerhalb einer zugänglichen Bandbreite aufweist,

**dadurch gekennzeichnet, dass** die Kemschicht (13) ein Oxid eines aus Tantal, Hafnium, Zirkonium, Titan und Aluminium ausgewählten Metalls aufweist, wodurch das Verhältnis zwischen der zugänglichen Bandbreite und der Eingangsbandbreite mindestens 4 beträgt und der Begriff "Bandbreite" hier als das das Wellenlängeninterval definiert wird, außerhalb dessen die spektrale Strahlstärke unterhalb eines Werts von -30 Dezibel (0,001) des Maximalwerts bleibt.

31. Verfahren nach Snspruch 30, wobei die Kemschicht (13) des planaren Lichtwellenleiters (10) eine Schicht aus Tantalperoxid ($Ta_2O_5$) mit einer Dicke zwischen ca. 500 nm und 800 nm aufweist und die Pufferschicht (12) eine 2 μm dicke Lage aus thermischem Siliziumdioxid ($SiO_2$) aufweist.

32. Verfahren nach Anspruch 30 oder 31, wobei der optische Ausgang (6) ein optisches Spektrum mit einem optischen Kontinuum (76) über die zugängliche Bandbreite infolge der nichtlinearen Verbreiterung des optischen Eingangssignals (3) aufweist.

**Revendications**

1. Dispositif pompé optiquement comprenant un dispositif optique non linéaire (5, 75) et une source laser (2, 71) générant des impulsions laser ultra-courtes (74), le dispositif optique non linéaire (5, 75) comprenant :

un guide d'onde optique planaire (10) couplé optiquement à la source laser (2, 71) pour recevoir les impulsions laser ultra-courtes (74) comme entrée optique (3), le guide d'onde optique planaire (10) comportant :

une couche coeur (13) comprenant une couche mince déposée d'un matériau ayant un indice de réfraction $n_c$ d'au moins 1,7 ; et

une couche tampon (12) d'un indice de réfraction $n_s$ de telle sorte que $n_c > n_s$,

dans lequel au moins une section (4) du guide d'onde optique planaire (10) est exploitable pour générer au moyen d'un processus optique non linéaire une sortie optique (6,76) à partir d'au moins une partie de l'entrée optique (3, 74), la sortie optique (6, 76) ayant une longueur d'onde dans une largeur de bande accessible du dispositif optique non linéaire (5, 75) et l'entrée optique (3, 74) ayant une largeur de bande d'entrée,

**caractérisé en ce que** la couche coeur (13) comprend un oxyde d'un métal sélectionné parmi le tantale, l'hafnium, le zirconium, le titane et l'aluminium, si bien que le rapport de la largeur de bande accessible du dispositif optique non linéaire (5, 75) sur la largeur de bande d'entrée est au moins 4, le terme "largeur de bande" étant défini ici comme l'intervalle de longueur d'onde au-delà duquel l'intensité rayonnante spectrale reste inférieure à un niveau de - 30 décibels (0,001) de la valeur maximale.

2.  Dispositif pompé optiquement selon la revendication 1, dans lequel le rapport de la largeur de bande accessible sur la largeur de bande d'entrée est au moins 10.

3.  Dispositif pompé optiquement selon la revendication 1 ou la revendication 2, dans lequel la couche coeur (13) est dopé avec un élément de terres rares.

4.  Dispositif pompé optiquement selon la revendication 1 ou la revendication 2, dans lequel la couche coeur (13) du guide d'onde optique planaire (10) comprend une couche de pentoxyde de tantale ($Ta_2O_5$) ayant une épaisseur entre approximativement 500 nm et 800 nm et la couche tampon (12) comprend une couche de $2\mu$m d'épaisseur de dioxyde de silicium thermique ($SiO_2$).

5.  Dispositif pompé optiquement selon l'une quelconque des revendications 1 à 4, dans lequel la largeur de bande accessible est au moins de 200 nm.

6.  Dispositif pompé optiquement selon l'une quelconque des revendications 1 à 4, dans lequel la largeur de bande accessible est au moins de 500 nm.

7.  Dispositif pompé optiquement selon l'une quelconque des revendications précédentes, dans lequel le processus optique non linéaire comprend un ou plusieurs processus sélectionnés dans un groupe qui comporte l'automodulation de phase, l'auto-focalisation, le mixage quatre ondes, la diffusion de Raman et la formation de solitons.

8.  Dispositif pompé optiquement selon l'une quelconque des revendications 1 à 7, dans lequel le guide d'ondes planaire (170) comprend une arête (174).

9.  Dispositif pompé optiquement selon l'une quelconque des revendications 1 à 7, dans lequel le guide d'onde planaire (180) comprend une nervure (183).

10. Dispositif pompé optiquement selon l'une quelconque des revendications précédentes, dans lequel une partie du guide d'onde planaire (120) est amincie (123).

11. Dispositif pompé optiquement selon l'une quelconque des revendications précédentes, dans lequel une partie du guide d'onde planaire (140) comporte une structure (145), la structure servant à modifier l'entrée optique et/ou la sortie optique.

12. Dispositif pompé optiquement selon la revendication 11, dans lequel la structure comprend une structure à cristal photonique (145).

13. Dispositif pompé optiquement selon la revendication 11, dans lequel la structure comprend une autre couche planaire (294) disposée sur le guide d'onde optique.

14. Dispositif pompé optiquement selon l'une quelconque des revendications 11 à 13, dans lequel la structure (145) sert à filtrer l'entrée optique et/ou la sortie optique (147).

15. Dispositif pompé optiquement selon l'une quelconque des revendications 11 à 13, dans lequel la structure sert à compresser temporellement l'entrée optique et/ou la sortie optique.

16. Dispositif pompé optiquement selon l'une quelconque des revendications 11 à 13, dans lequel la structure sert à modifier les caractéristiques de dispersion optique du guide d'onde planaire.

**17.** Dispositif pompé optiquement selon la revendication 16, dans lequel les caractéristiques de dispersion optique du guide d'onde optique planaire sont modifiées pour parvenir à une dispersion nulle à des points le long du guide d'onde.

**18.** Dispositif pompé optiquement selon la revendication 17, dans lequel les caractéristiques de dispersion optique du guide d'onde optique planaire sont modifiées pour parvenir à une dispersion normale à une longueur d'onde prédéterminée.

**19.** Source de continuum optique (70) comprenant un dispositif pompé optiquement selon l'une quelconque des revendications précédentes, dans laquelle la sortie optique (76) a un spectre optique comprenant un continuum optique sur la largeur de bande accessible suite à l'élargissement non linéaire de l'entrée optique (3).

**20.** Source de continuum optique selon la revendication 19, dans laquelle le processus optique non linéaire est lancé avec une entrée de départ optique.

**21.** Interféromètre (330) comprenant :

une source de continuum optique (331) selon la revendication 19 ou la revendication 20 ;
un bras de référence (332) ; un bras de signal (333) ; un bras de détection (334) ;
un diviseur de faisceau (335) couplé optiquement à la source de continuum optique (331), en service, le diviseur de faisceau divisant la sortie de continuum optique entre le bras de référence (332) et le bras de signal (333) ; et,
un combineur de faisceaux (135) couplé optiquement au bras de détection (134), en service, le combineur de faisceaux combinant les faisceaux optiques réfléchis par une partie du bras de référence et par une partie du bras de signal.

**22.** Interféromètre selon la revendication 21, dans lequel un même composant optique (135) sert de diviseur de faisceau et de combineur de faisceaux.

**23.** Interféromètre selon la revendication 21 ou 22, l'interféromètre comprenant un circuit intégré photonique (340).

**24.** Interféromètre selon l'une quelconque des revendications précédentes 21 à 23, dans lequel une branche (381) de l'interféromètre comporte une structure à cristal photonique (386).

**25.** Système d'exécution d'une tomographie à cohérence optique sur un échantillon, le système comprenant :

un interféromètre (321) selon l'une quelconque des revendications 21 à 24, en service, l'échantillon étant situé dans le bras de signal ;
un moyen pour faire varier une longueur de trajet optique du bras de référence (324) ; et,
un détecteur (329) pour détecter le faisceau optique recombiné comprenant un faisceau optique réfléchi par le bras de référence et un faisceau rétrodiffusé par l'échantillon dans le bras de signal.

**26.** Oscillateur paramétrique optique (470) comprenant un dispositif pompé optiquement selon l'une quelconque des revendications 1 à 18 et un moyen pour fournir une rétroaction optique (476) à une longueur d'onde dans la largeur de bande accessible.

**27.** Oscillateur paramétrique optique selon la revendication 26, dans lequel le moyen de rétroaction optique est fourni au moins en partie par une structure photonique (494).

**28.** Amplificateur paramétrique optique comprenant un dispositif pompé optiquement selon l'une quelconque des revendications 1 à 18, adapté pour recevoir une autre entrée optique à amplifier à une longueur d'onde dans la largeur de bande accessible.

**29.** Système optique comportant un dispositif pompé optiquement selon l'une quelconque des revendications 1 à 18.

**30.** Procédé de génération d'un signal optique comprenant les étapes consistant à :

produire des impulsions laser ultra-courtes (74) à partir d'une source laser (71) comme signal d'entrée optique (3) au niveau d'une entrée optique d'un guide d'onde planaire (10), ledit guide d'onde optique planaire (10) comportant une couche coeur (13) comprenant une couche mince déposée d'un matériau ayant un indice de réfraction $n_c$ d'au moins 1,7, et une couche tampon (12) d'un indice de réfraction $n_s$ de telle sorte que $n_c > n_s$ ; le guidage du signal d'entrée optique le long de la couche coeur (13) du guide d'onde optique planaire (10) ; et la génération d'une sortie optique (6) à partir d'au moins une partie du signal d'entrée optique (3) au moyen d'un processus optique non linéaire dans au moins une section du guide d'onde optique planaire (10), la sortie optique (6) ayant une longueur d'onde dans une largeur de bande accessible,

**caractérisé en ce que** la couche coeur (13) comprend un oxyde d'un métal sélectionné parmi le tantale, l'hafnium, le zirconium, le titane et l'aluminium, si bien que le rapport de la largeur de bande accessible sur la largeur de bande d'entrée est au moins 4, le terme "largeur de bande" étant défini ici comme l'intervalle de longueur d'onde au-delà duquel l'intensité rayonnante spectrale reste inférieure à un niveau de ,30 décibels (0,001) de la valeur maximale.

31. Procédé selon la revendication 30, dans lequel la couche coeur (13) du guide d'onde optique planaire (10) comprend une couche de pentoxyde de tantale ($Ta_2O_5$) ayant une épaisseur d'entre environ 500 nm et 800 nm et la couche tampon (12) comprend une couche de 2 $\mu$m d'épaisseur de dioxyde de silicium thermique ($SiO_2$).

32. Procédé selon la revendication 30 ou la revendication 31, dans lequel la sortie optique (6) a un spectre optique comprenant un continuum optique (76) sur la largeur de bande accessible suite à l'élargissement non linéaire du signal d'entrée optique (3).

**1**

**2**    **3**    **4**    **5**    **6**

**Fig 1A**

**10**

14
13
12
11

**Fig 1B**

**10**

13
12
11

**Fig 1C**

Fig 2

**Fig 3**

(A) Laser beam / Material

(B) $\vec{E}_{field}$ / Electric field of laser / $\vec{E}_{at}$ / Material atoms charge distribution

(C) I / $\lambda$ / I / $\lambda$ / Input laser / Wavelength conversion / Material

(D) Distortion of atomic cloud by the intense laser filed

## Fig 4

Material

Laser

**Fig 5A**

$r$

$I(r)$

**Fig 5B**

$r$

$n(r)$

**Fig 5C**

Phase shift and frequency shift

$\Delta\phi$

$\Delta\omega$

0.0

0.0
Time relative to pulse centre

**Fig 6A**

Spectral intensity

0.5

Wavelength

**Fig 6B**

**Fig 7**

**Fig 8**

**Fig 9A**

**Fig 9B**

**Fig 10**

**Fig 11**

**Fig 12**

**Fig 13**

140

146    144    145    147

I    I

λ    λ

142    143

**Fig 14**

150

158    154    155    159

I    I

λ    λ

153    152    156    157

**Fig 15**

**Fig 16**

**Fig 17**

**Fig 18**

Fig 19

Fig 20

**Fig 21**

**Fig 22**

**Fig 23**

**Fig 24A**

**Fig 24B**

**Fig 25A**

**Fig 25B**

260

264

263

265

266

I

λ

262

I

267

λ

**Fig 26**

270

274

275

I

λ

273

272

276

**Fig 27**

**Fig 28**

**Fig 29**

**Fig 30**

**Fig 31**

322  321  320

324

325

326  328

329  327

**Fig 32**

330  332

331

335

334  333

**Fig 33**

**Fig 34**

**Fig 35**

**Fig 36**

**Fig 37**

**Fig 38**

**Fig 39**

**Fig 40**

410

411

415    413

414

412

**Fig 41**

420

421

425

426

423    424

422

**Fig 42**

**Fig 43**

**Fig 44**

**PRIOR ART**

**Fig 45**

**PRIOR ART**

**Fig 46**

**Fig 47**

**Fig 48**

**Fig 49**

**Fig 50**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10196727 B
- US 10287825 B
- US 10421949 B

**Non-patent literature cited in the description**

- **KOLESOV. R.** Optical continua generation in a coherently prepared Raman medium. *Physical Review A (Atomic, Molecular, and Optical Physics,* November 2001, vol. 64 (6), 063819, 1-8
- **S. SPÄLTER et al.** Strong self-phase modulation in planar chalcogenide glass waveguides. *optics letters,* vol. 27 (5), 363-365
- Propagation of femtosecond pulses in focusing nonlinear Kerr planar waveguides. **GROSS B et al.** Optics Communications. North-Holland Publishing Co, 01 August 1996, vol. 129, 143-151